# EUROPÄISCHE PATENTSCHRIFT

(11) **EP 3 036 862 B1**
(45) Veröffentlichungstag und Bekanntmachung des Hinweises auf die Patenterteilung: **31.01.2018**
(21) Anmeldenummer: 15721177.2
(22) Anmeldetag: 29.04.2015
(51) Int. Cl.: H04L 5/14

(54) **VERFAHREN ZUM BETREIBEN EINES NETZWERKS UND NETZWERKTEILNEHMER**
METHOD FOR OPERATING A NETWORK AND NETWORK PARTICIPANTS
PROCÉDÉ D'EXPLOITATION D'UN RÉSEAU ET ÉLÉMENT PARTICIPANT D'UN RÉSEAU

(30) Priorität: 29.04.2014 DE 102014106017
(43) Veröffentlichungstag der Anmeldung: 29.06.2016
(73) Patentinhaber: Beckhoff Automation GmbH, 33415 Verl (DE)
(72) Erfinder: BUNTE, Thorsten, 33335 Gütersloh (DE); BÜTTNER, Holger, 12157 Berlin (DE); JANSSEN, Dirk, 33415 Verl (DE); RETTIG, Thomas, 33378 Rheda-Wiedenbrück (DE); BECKHOFF, Hans, 33415 Verl (DE); VONNAHME, Erik, 33154 Salzkotten (DE)
(74) Vertreter: Patentanwaltskanzlei WILHELM & BECK
(86) Internationale Anmeldenummer: PCT/EP2015/059369
(87) Internationale Veröffentlichungsnummer: WO 2015/165984

(56) Entgegenhaltungen:
- EP-A1- 2 706 707
- DE-A1-102004 061 343
- US-A1- 2007 005 772
- US-A1- 2007 192 505

## Beschreibung

Die vorliegende Erfindung betrifft ein Verfahren zum Betreiben eines Netzwerks gemäß Patentanspruch 1 sowie einen Netzwerkteilnehmer gemäß Patentanspruch 15.

Datennetzwerke sind aus dem Stand der Technik bekannt. Es ist bekannt, dass Datennetzwerke in unterschiedlichen Topologien angelegt werden können, beispielsweise in Ring-Topologie oder in geöffneter Ring-Topologie (Linien-Topologie).

Kabelgebundene Datennetzwerke nach dem Stand der Technik basieren häufig auf dem Ethernet-Standard. Ethernet-Datennetzwerke können im Stand der Technik mit unterschiedlichen Übertragungsraten betrieben werden, beispielsweise mit Übertragungsraten von 10 Mbit/s, 100 Mbit/s oder 1 Gbit/s.

Unter dem Oberbegriff "Industrial Ethernet" ist es im Stand der Technik außerdem bekannt, Ethernet-Datennetzwerke zur Vernetzung von Geräten in der industriellen Fertigung und der Automatisierungstechnik zu nutzen. Solche Datennetze können beispielsweise auf dem EtherCAT-Standard gemäß IEC-Norm "IEC 61158" basieren.

Ethernet-Controller, die eine Übertragungsrate von 1 Gbit/s unterstützen, können in der Regel auch mit 100 Mbit/s betrieben werden. Umfasst ein Netzwerk einige Netzwerkteilnehmer, die Übertragungsraten von 1 Gbit/s und 100 Mbit/s unterstützen, und andere Netzwerkteilnehmer, die nur 100 Mbit/s unterstützen, so sollte das komplette Netzwerk mit 100 Mbit/s betrieben werden.

Zwischen zwei benachbarten Netzwerkteilnehmern eines Netzwerks kann beispielsweise automatisch die größtmögliche Übertragungsrate eingestellt werden. Unterstützen zwei benachbarte Netzwerkteilnehmer beide 1 Gbit/s, wird beim Einschalten zwischen diesen Netzwerkteilnehmern eine Verbindung mit einer Übertragungsrate von 1 Gbit/s aufgebaut. Um diese Verbindung auf eine Übertragungsrate 100 Mbit/s zu ändern, muss die Verbindung getrennt und anschließend erneut mit einer Übertragungsrate von 100 Mbit/s aufgebaut werden. Dieser Vorgang dauert mit etwa 1 s relativ lange.

Unterstützt in einem beispielhaften Netzwerk mit Linien-Topologie ein an einem Ende angeordneter erster Netzwerkteilnehmer nur eine Übertragungsrate von 100 Mbit/s, während alle anderen Netzwerkteilnehmer auch eine Übertragungsrate von 1 Gbit/s unterstützen, so werden die Verbindungen des ersten Netzwerkteilnehmers anfangs mit einer Übertragungsrate von 100 Mbit/s aufgebaut, die übrigen Verbindungen des Netzwerks dagegen mit einer Übertragungsrate von 1 Gbit/s.

Ein dem ersten Netzwerkteilnehmer benachbarter zweiter Netzwerkteilnehmer erkennt dann, dass eine seiner Verbindungen auf eine Übertragungsrate von 100 Mbit/s eingestellt ist, eine andere seiner Verbindungen dagegen auf eine Übertragungsrate von 1 Gbit/s und daher umgestellt werden muss. Hierzu trennt der zweite Netzwerkteilnehmer diese Verbindung und baut sie mit einer Übertragungsrate von 100 Mbit/s neu auf, was die genannte Zeit von etwa 1 s in Anspruch nimmt. Anschließend erkennt ein dem zweiten Netzwerkteilnehmer benachbarter dritter Netzwerkteilnehmer, dass eine seiner Verbindungen nun auf eine Übertragungsrate von 100 Mbit/s eingestellt ist, eine andere seiner Verbindungen dagegen auf eine Übertragungsrate von 1 Gbit/s. Wiederum erfolgen Trennung und Neuaufbau dieser Verbindung , was wiederum die genannte Zeit in Anspruch nimmt.

Auf diese Weise propagiert die Geschwindigkeitsanpassung schrittweise durch das Netzwerk. Die Umstellung der Übertragungsraten erfolgt nicht gleichzeitig, sondern nacheinander für jede Verbindung einzeln. Hierbei vergeht eine lange Zeit, bis das Netzwerk betriebsbereit ist.

Die EP 2 706 707 A1 beschreibt ein System zum Aushandeln von Ethernet-Verbindungseinstellungen zwischen verbundenen Knoter eines Netzwerks. Dabei wird ein Zwischengerät zwischen zwei Netzwerkknoten angeordnet, wobei die Verbindungseinstellunger zwischen den Netzwerkknoten und dem Zwischengerät gleich sind, um eine automatische Aushandlung in dem Zwischengerät zu verhindern. Das Zwischengerät kann während der Verhandlungsphase Verhandlungsnachrichten transparent von einem der Knoten zum anderen Knoten weiterleiten, ohne diese Nachrichten selbst zu bearbeiten.

Eine Aufgabe der vorliegenden Erfindung besteht darin, ein verbessertes Verfahren zum Betreiben eines Netzwerks anzugeben. Diese Aufgabe wird durch ein Verfahren mit den Merkmaler des Anspruchs 1 gelöst. Eine weitere Aufgabe der Erfindung besteht darin, einen Netzwerkteilnehmer bereitzustellen. Diese Aufgabe wird durch einen Netzwerkteilnehmer mit den Merkmalen des Anspruchs 15 gelöst. In den abhängigen Ansprüchen sind verschiedene Weiterbildungen angegeben.

Bei einem Verfahren zum Betreiben eines Netzwerks, bei dem ein erster Netzwerkteilnehmer über eine erste Verbindung mit einem weiteren Netzwerkteilnehmer verbunden ist, führt der erste Netzwerkteilnehmer Schritte durch zum Empfangen eines Datentelegramms, das die Information enthält, dass bei Verbindungen ein Parameter auf einen ersten Wert eingestellt werden muss, über die erste Verbindung, und zum Prüfen, ob der erste Netzwerkteilnehmer über eine zweite Verbindung mit noch einem weiteren Netzwerkteilnehmer des Netzwerks verbunden ist und bei der zweiten Verbindung der Parameter nicht auf den ersten Wert eingestellt ist. In diesem Fall führt dei erste Netzwerkteilnehmer außerdem Schritte durch zum Weiterleiten des Datentelegramms über die zweite Verbindung, zum Trennen der zweiten Verbindung und zum Neuaufbauen der zweiten Verbindung, wobei der Parameter für die zweite Verbindung auf den ersten Wert eingestellt wird.

Vorteilhafterweise ermöglicht es dieses Verfahren, den Wert des Parameters bei mehreren oder allen Verbindungen eines Netzwerks an einen gewünschten Wert anzugleichen. Dadurch kann vorteilhafterweise ein störungsfreier Betrieb des Netzwerks gewährleistet werden. Ein besonderer Vorteil des Verfahrens besteht darin, dass vor dem Trennen und Neuaufbauen der zweiten Verbindung das Datentelegramm, das die Information enthält, dass bei Verbindungen der Parameter auf den ersten Wert eingestellt werden muss, weitergeleitet wird. Dadurch kann das Datentelegramm bereits vor der Trennung der zweiten Verbindung zu weiteren Netzwerkteilnehmern des Netzwerks gelangen, die über Verbindungen mit anderen Netzwerkteilnehmern des Netzwerks verbunden sind, bei denen der Parameter nicht auf den ersten Wert eingestellt ist. Dadurch wird es ermöglicht, dass mehrere Netzwerkteilnehmer des Netzwerks Schritte zum Trennen und Neuaufbauen von Verbindungen gleichzeitig und parallel zueinander durchführen. Hierdurch reduziert sich vorteilhafterweise die erforderliche Gesamtzeit, bis der Wert des Parameters in den Verbindungen des Netzwerks angeglichen ist.

In einer Ausführungsform des Verfahrens sendet der erste Netzwerkteilnehmer das Datentelegramm über alle seine Verbindungen außer der ersten Verbindung aus, bei denen der Parameter nicht auf den ersten Wert eingestellt ist. Vorteilhafterweise ermöglicht es das Verfahren dadurch, das Datentelegramm an Verzweigungspunkten des Netzwerks in alle Äste des Netzwerks gleichzeitig weiterzuleiten. Dadurch können vorteilhafterweise erforderliche Trennungen und Wiederherstellungen von Verbindungen in allen Teilen des Netzwerks parallel erfolgen, wodurch sich der insgesamt erforderliche Zeitaufwand drastisch reduzieren kann.

In einer Ausführungsform des Verfahrens ist ein zweiter Netzwerkteilnehmer des Netzwerks über eine dritte Verbindung und eine vierte Verbindung mit weiteren Netzwerkteilnehmern des Netzwerks verbunden. Dabei führt der zweite Netzwerkteilnehmer Schritte durch zum Erkennen, dass bei der dritten Verbindung der Parameter auf den ersten Wert eingestellt ist und bei der vierten Verbindung der Parameter auf einen zweiten Wert eingestellt ist, zum Aussenden des Datentelegramms, das die Information enthält, dass bei Verbindungen der Parameter auf den ersten Wert eingestellt werden muss, zum Trennen der vierten Verbindung und zum Neuaufbauen der vierten Verbindung, wobei der Parameter für die vierte Verbindung auf den ersten Wert eingestellt wird.

Vorteilhafterweise ermöglicht es dieses Verfahren, den Wert des Parameters bei mehreren oder allen Verbindungen des Netzwerks an einen gemeinsamen Wert anzugleichen. Dadurch kann vorteilhafterweise ein störungsfreier Betrieb des Netzwerks gewährleistet werden. Ein besonderer Vorteil des Verfahrens besteht darin, dass vor dem Trennen und Neuaufbauen der vierten Verbindung das Datentelegramm, das die Information enthält, dass bei Verbindungen der Parameter auf den ersten Wert eingestellt werden muss, ausgesendet wird. Dadurch wird es ermöglicht, dass mehrere Netzwerkteilnehmer des Netzwerks Schritte zum Trennen und Neuaufbauen von Verbindungen gleichzeitig und parallel zueinander durchführen. Hierdurch reduziert sich vorteilhafterweise die erforderliche Zeit, bis der Wert des Parameters in den Verbindungen des Netzwerks aneinander angeglichen ist.

In einer Ausführungsform des Verfahrens sendet der zweite Netzwerkteilnehmer das Datentelegramm über die vierte Verbindung aus. Vorteilhafterweise erhalten dadurch über die vierte Verbindung mit dem zweiten Netzwerkteilnehmer des Netzwerks verbundene weitere Netzwerkteilnehmer des Netzwerks eine Nachricht, dass bei Verbindungen der Parameter auf den ersten Wert einzustellen ist.

In einer Ausführungsform des Verfahrens sendet der zweite Netzwerkteilnehmer das Datentelegramm über alle seine Verbindungen aus, bei denen der Parameter nicht auf den ersten Wert eingestellt ist. Vorteilhafterweise wird dadurch erreicht, dass das Datentelegramm an einem Verzweigungspunkt des Netzwerks in alle Äste des Netzwerks gleichzeitig weitergeleitet wird. Dadurch kann das Einstellen des Parameters auf den ersten Wert vorteilhafterweise in allen Ästen des Netzwerks parallel erfolgen, wodurch der hierfür insgesamt erforderliche Zeitaufwand reduziert wird.

In einer Ausführungsform des Verfahrens sendet der zweite Netzwerkteilnehmer das Datentelegramm nicht über die dritte Verbindung aus. Dies ist nicht erforderlich, da bei der dritten Verbindung der Parameter bereits auf den ersten Wert eingestellt ist. Vorteilhafterweise wird hierdurch unnötiger Datenverkehr vermieden. Außerdem werden vorteilhafterweise unnötige Verbindungstrennungen und erneute Verbindungsherstellungen vermieden.

In einer Ausführungsform des Verfahrens ist ein zweiter Netzwerkteilnehmer des Netzwerks über eine dritte Verbindung mit einem weiteren Netzwerkteilnehmer des Netzwerks verbunden. Dabei führt der zweite Netzwerkteilnehmer einen Schritt durch zum Aussenden des Datentelegramms, das die Information enthält, dass bei Verbindungen der Parameter auf den ersten Wert eingestellt werden muss, über die dritte Verbindung. Vorteilhafterweise ermöglicht das Verfahren dadurch eine durch einen Netzwerkteilnehmer eines Netzwerks angeforderte Einstellung eines Parameters von Verbindungen auf einen bestimmten Wert. Der anfordernde Netzwerkteilnehmer kann dabei beispielsweise ein Master des Netzwerks sein. Dadurch ermöglicht das Verfahren beispielsweise eine gesteuerte Änderung einer Übertragungsrate oder eines anderen Parameters des Netzwerks.

In einer Ausführungsform des Verfahrens führt der zweite Netzwerkteilnehmer weitere Schritte durch zum Trennen der dritten Verbindung und zum Neuaufbau der dritten Verbindung, wobei der Parameter für die dritte Verbindung auf den ersten Wert eingestellt wird. Vorteilhafterweise wird dadurch sichergestellt, dass die Änderung des Parameters auch für die mit dem zweiten Netzwerkteilnehmer verbundene dritte Verbindung wirksam wird.

In einer Ausführungsform des Verfahrens ist der Parameter eine Übertragungsrate. Vorteilhafterweise kann das Verfahren dadurch sicherstellen, dass alle Verbindungen eines Netzwerks mit gleicher Übertragungsrate betrieben werden. Hierdurch werden vorteilhafterweise Datenstaus, Pufferüberläufe und Pufferleerläufe vermieden.

In einer Ausführungsform des Verfahrens ist der erste Wert eine Übertragungsrate von 100 Mbit/s. Vorteilhafterweise kann das Verfahren dadurch sicherstellen, dass alle Verbindungen des Netzwerks mit einer Übertragungsrate betrieben werden, die von allen Netzwerkteilnehmern des Netzwerks unterstützt wird.

In einer Ausführungsform des Verfahrens ist der zweite Wert eine Übertragungsrate von 1 Gbit/s. Vorteilhafterweise ermöglicht es das Verfahren dadurch, das Netzwerk mit Netzwerkteilnehmern zu betreiben, die eine Übertragungsrate von 1 Gbit/s und eine niedrigere Übertragungsrate unterstützen, wie auch mit Netzwerkteilnehmern, die lediglich die niedrigere Übertragungsrate unterstützen. Durch das Verfahren wird vorteilhafterweise sichergestellt, dass sich alle Verbindungen des Netzwerks in diesem Fall auf die niedrigere Übertragungsrate einstellen.

In einer Ausführungsform des Verfahrens ist der Parameter ein Telegrammformat, eine minimale Telegrammlänge, eine maximale Telegrammlänge, ein minimaler zeitlicher Abstand zwischen zwei gesendeten Datenrahmen, ein Leitungscode oder ein Adressierungsmodus. Vorteilhafterweise ermöglicht das Verfahren in dieser Ausführungsform eine Angleichung eines dieser Parameter in allen Verbindungen des Netzwerks. Vorteilhafterweise wird dadurch ein störungsfreier Betrieb des Netzwerks ermöglicht.

In einer Ausführungsform des Verfahrens ist das Datentelegramm ein Ethernet-Telegramm. Vorteilhafterweise ist das Verfahren dadurch in einer großen Zahl bereits bestehender Netzwerke einsetzbar.

In einer Ausführungsform des Verfahrens ist das Datentelegramm ein EtherCAT-Telegramm, also ein Ethernet-Telegramm eines speziellen Typs. Vorteilhafterweise ist das Verfahren dadurch in einem Netzwerk zur Automatisierung anwendbar. Ein besonderer Vorteil des Verfahrens besteht darin, dass es einen gemischten Betrieb des Netzwerks mit Netzwerkteilnehmern ermöglicht, die eine Übertragungsrate von 100 Mbit/s und 1 Gbit/s unterstützen, mit anderen Netzwerkteilnehmern, die lediglich eine Übertragungsrate von 100 Mbit/s erlauben.

Ein Netzwerkteilnehmer ist dazu ausgebildet, ein Verfahren der vorgenannten Art durchzuführen. Vorteilhafterweise kann dieser Netzwerkteilnehmer in einem Netzwerk eingesetzt werden, in dem Netzwerkteilnehmer, die für einen Parameter einer Verbindung unterschiedliche Werte erlauben, mit solchen Netzwerkteilnehmern gemischt sind, die für den Parameter der Verbindung nur einen Wert erlauben. Dabei ermöglicht es der Netzwerkteilnehmer, den Parameter innerhalb des Netzwerks automatisch auf einen Wert einzustellen, der von allen Netzwerkteilnehmern des Netzwerks unterstützt wird. Der Parameter kann dabei insbesondere eine Übertragungsrate sein.

Die Erfindung wird im Folgenden anhand von Figuren näher erläutert. Dabei zeigen:
Fig. 1 eine schematische Darstellung eines ersten Netzwerks zu einem ersten Zeitpunkt;
Fig. 2 ein schematisches Ablaufdiagramm eines ersten Teils eines Verfahrens;
Fig. 3 ein schematisches Ablaufdiagramm eines zweiten Teils des Verfahrens;
Fig. 4 eine schematische Darstellung des ersten Netzwerks zu einem zweiten Zeitpunkt;
Fig. 5 eine schematische Darstellung des ersten Netzwerks zu einem dritten Zeitpunkt;
Fig. 6 eine schematische Darstellung eines zweiten Netzwerks zu einem ersten Zeitpunkt;
Fig. 7 eine schematische Darstellung des zweiten Netzwerks zu einem zweiten Zeitpunkt;
Fig. 8 eine schematische Darstellung des zweiten Netzwerks zu einem dritten Zeitpunkt;
Fig. 9 eine schematische Darstellung eines dritten Netzwerks zu einem ersten Zeitpunkt;
Fig. 10 eine schematische Darstellung des dritten Netzwerks zu einem zweiten Zeitpunkt;
Fig. 11 eine schematische Darstellung des dritten Netzwerks zu einem dritten Zeitpunkt;
Fig. 12 eine schematische Darstellung eines vierten Netzwerks zu einem ersten Zeitpunkt;
Fig. 13 ein schematisches Ablaufdiagramm eines dritten Teils des Verfahrens;
Fig. 14 eine schematische Darstellung des vierten Netzwerks zu einem zweiten Zeitpunkt; und
Fig. 15 eine schematische Darstellung des vierten Netzwerks zu einem dritten Zeitpunkt.

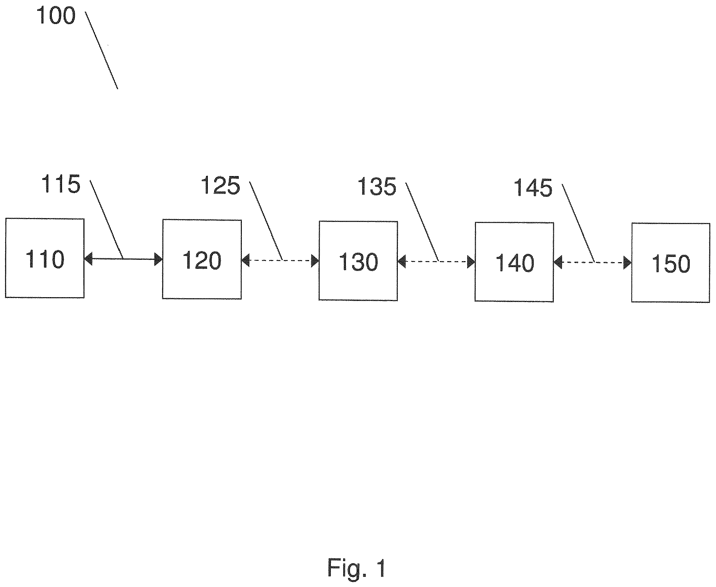

Fig. 1 zeigt eine schematische Darstellung eines ersten Netzwerks 100. Das erste Netzwerk 100 ist ein Datennetzwerk, das zur Übertragung von Daten zwischen Netzwerkteilnehmern des ersten Netzwerks 100 dient. Das erste Netzwerk 100 kann ein drahtloses Netzwerk oder ein kabelgebundenes Netzwerk sein. Das erste Netzwerk 100 kann beispielsweise ein auf dem Ethernet-Standard basierendes Netzwerk sein.

Das erste Netzwerk 100 kann zur Vernetzung von Geräten in der industriellen Fertigung und/oder für Kontroll- oder Automatisierungszwecke dienen. Das erste Netzwerk 100 kann beispielsweise ein Netzwerk nach dem EtherCAT-Standard sein.

Das erste Netzwerk 100 weist im in Fig. 1 dargestellten Beispiel eine Linien-Topologie auf. Die Linien-Topologie des ersten Netzwerks 100 kann auch als geöffnete Ring-Topologie verstanden werden. Die einzelnen Netzwerkteilnehmer des ersten Netzwerks 100 sind dabei über Einpunktverbindungen und Zweipunktverbindungen hintereinander angeordnet.

Das in Fig. 1 gezeigte beispielhafte erste Netzwerk 100 umfasst einen ersten Netzwerkteilnehmer 110, einen zweiten Netzwerkteilnehmer 120, einen dritten Netzwerkteilnehmer 130, einen vierten Netzwerkteilnehmer 140 und einen fünften Netzwerkteilnehmer 150. Der erste Netzwerkteilnehmer 110 ist über eine erste Verbindung 115 mit dem zweiten Netzwerkteilnehmer 120 verbunden. Der zweite Netzwerkteilnehmer 120 ist über eine zweite Verbindung 125 mit dem dritten Netzwerkteilnehmer 130 verbunden. Der dritte Netzwerkteilnehmer 130 ist über eine dritte Verbindung 135 mit dem vierten Netzwerkteilnehmer 140 verbunden. Der vierte Netzwerkteilnehmer 140 ist über eine vierte Verbindung 145 mit dem fünften Netzwerkteilnehmer 150 verbunden.

Bei jeder der Verbindungen 115, 125, 135, 145 zwischen den Netzwerkteilnehmern 110, 120, 130, 140, 150 des ersten Netzwerks 100 können ein oder mehrere Parameter auf für die jeweilige Verbindung 115, 125, 135, 145 festgelegte Werte eingestellt sein. Solche Parameter können beispielsweise eine Übertragungsrate, ein Telegrammformat, eine minimale Telegrammlänge, eine maximale Telegrammlänge, ein minimaler zeitlicher Abstand zwischen zwei gesendeten Datenrahmen, ein Leitungscode oder ein Adressierungsmodus sein.

Jeder der Netzwerkteilnehmer 110, 120, 130, 140, 150 kann für jeden der ein oder mehreren Parameter einen oder mehrere unterschiedliche Werte unterstützen. Beispielsweise können die Netzwerkteilnehmer 110, 120, 130, 140, 150, je nach Bauart, nur ein mögliches Telegrammformat und nur eine mögliche Übertragungsrate oder mehrere verschiedene Telegrammformate und mehrere verschiedene Übertragungsraten unterstützen.

Zwei benachbarte Netzwerkteilnehmer 110, 120, 130, 140, 150 des ersten Netzwerks 100 einigen sich beim Herstellen der zwischen ihnen bestehenden Verbindung 115, 125, 135, 145 für jeden der für die jeweilige Verbindung 115, 125, 135, 145 einzustellenden Parameter auf einen Wert, der von beiden benachbarten Netzwerkteilnehmern 110, 120, 130, 140, 150 unterstützt wird. Die Auswahl des Werts kann dabei nach festgelegten Regeln oder auch zufällig erfolgen. Dies kann zur Folge haben, dass in dem ersten Netzwerk 100 bei unterschiedlichen Verbindungen 115, 125, 135, 145 für einen oder mehrere Parameter unterschiedliche Werte eingestellt werden. Für einen störungsfreien Betrieb des ersten Netzwerks 100 kann es jedoch erforderlich sein, dass einer oder mehrere dieser Parameter bei allen Verbindungen 115, 125, 135, 145 des ersten Netzwerks 100 auf einen einheitlichen Wert eingestellt ist.

Im in Fig. 1 beispielhaft dargestellten ersten Netzwerk 100 unterstützen der zweite Netzwerkteilnehmer 120, der dritte Netzwerkteilnehmer 130, der vierte Netzwerkteilnehmer 140 und der fünfte Netzwerkteilnehmer 150 jeweils eine Übertragungsrate von 100 Mbit/s wie auch eine Übertragungsrate von 1 Gbit/s. Der erste Netzwerkteilnehmer 100 unterstützt jedoch lediglich eine Übertragungsrate von 100 Mbit/s. Der zweite Netzwerkteilnehmer 120 und der dritte Netzwerkteilnehmer 130 haben für die zwischen ihnen bestehende zweite Verbindung 125 eine Übertragungsrate von 1 Gbit/s vereinbart. Entsprechend haben auch der dritte Netzwerkteilnehmer 130, der vierte Netzwerkteilnehmer 140 und der fünfte Netzwerkteilnehmer 150 für die zwischen ihnen bestehende dritte Verbindung 135 und vierte Verbindung 145 eine Übertragungsrate von 1 Gbit/s vereinbart. Für die zwischen dem ersten Netzwerkteilnehmer 110 und dem zweiten Netzwerkteilnehmer 120 bestehende erste Verbindung 115 haben der erste Netzwerkteilnehmer 110 und der zweite Netzwerkteilnehmer 120 hingegen eine Übertragungsrate von 100 Mbit/s vereinbart.

Für einen störungsfreien Betrieb des ersten Netzwerks 100 ist es erforderlich, dass alle Verbindungen 115, 125, 135, 145 auf die gleiche Übertragungsrate eingestellt werden. Da der erste Netzwerkteilnehmer 110 lediglich eine Übertragungsrate von 100 Mbit/s unterstützt, müssen auch die zweite Verbindung 125, die dritte Verbindung 135 und die vierte Verbindung 145 auf eine Übertragungsrate von 100 Mbit/s eingestellt werden.

Zur Änderung der Werte der Parameter der Verbindungen 115, 125, 135, 145, beispielsweise zur Änderung der eingestellten Übertragungsrate, ist es erforderlich, die jeweilige Verbindung 115, 125, 135, 145 zu trennen und anschließend mit dem gewünschten Wert des Parameters neu aufzubauen. Dieser Vorgang kann mit einem erheblichen Zeitaufwand verbunden sein. Beispielsweise kann das Trennen und Neuaufbauen einer Verbindung 115, 125, 135, 145 eine Zeit von etwa einer Sekunde erfordern. Daher ist es wünschenswert, diesen Vorgang bei allen Verbindungen 125, 135, 145 des ersten Netzwerks 100, bei denen dies erforderlich ist, im Wesentlichen parallel durchzuführen. Dies wird durch ein nachfolgend erläutertes Verfahren ermöglicht.

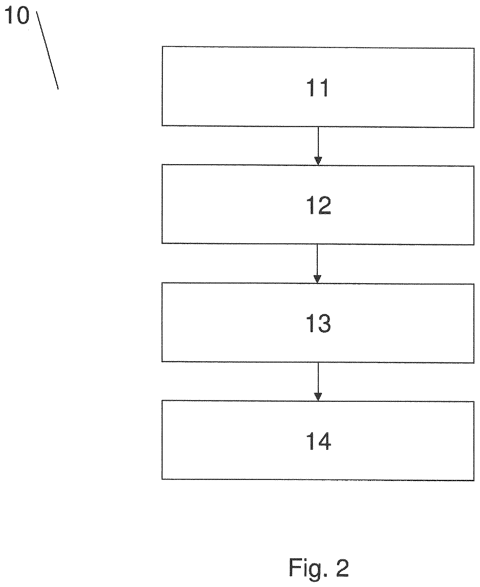

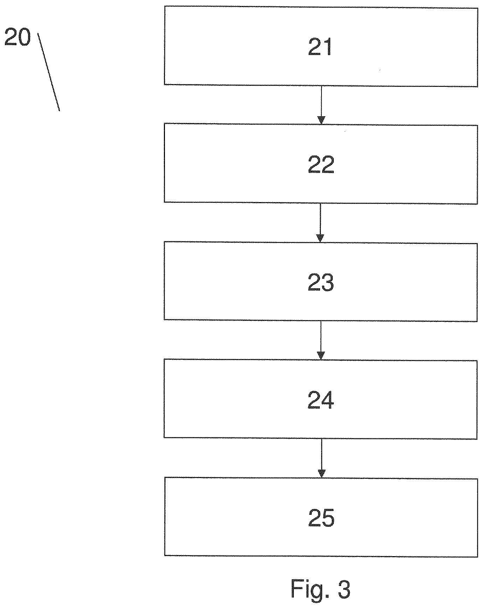

Fig. 2 zeigt ein schematisches Ablaufdiagramm eines ersten Verfahrensteils 10. Der erste Verfahrensteil 10 umfasst Verfahrensschritte, die durch den zweiten Netzwerkteilnehmer 120 des ersten Netzwerks 100 ausgeführt werden. Fig. 3 zeigt ein schematisches Ablaufdiagramm eines zweiten Verfahrensteils 20. Der zweite Verfahrensteil 20 umfasst Verfahrensschritte, die durch den dritten Netzwerkteilnehmer 130, den vierten Netzwerkteilnehmer 140 und den fünften Netzwerkteilnehmer 150 des ersten Netzwerks 100 ausgeführt werden.

In einem ersten Verfahrensschritt 11 des ersten Verfahrensteils 10 erkennt der zweite Netzwerkteilnehmer 120 des ersten Netzwerks 100, dass bei der zu dem ersten Netzwerkteilnehmer 110 bestehenden ersten Verbindung 115 ein Parameter auf einen ersten Wert eingestellt ist, während dieser Parameter bei der zum dritten Netzwerkteilnehmer 130 bestehenden zweiten Verbindung 125 auf einen vom ersten Wert verschiedenen zweiten Wert eingestellt ist. Im konkreten Beispiel erkennt der zweite Netzwerkteilnehmer 120 im ersten Verfahrensschritt 11 des ersten Verfahrensteils 10, dass bei der ersten Verbindung 115 eine Übertragungsrate von 100 Mbit/s eingestellt ist, während bei der zweiten Verbindung 125 eine Übertragungsrate von 1 Gbit/s eingestellt ist.

In einem zweiten Verfahrensschritt 12 des ersten Verfahrensteils 10 sendet der zweite Netzwerkteilnehmer 120 ein Datentelegramm aus, das die Information enthält, dass bei Verbindungen 115, 125, 135, 145 zwischen Netzwerkteilnehmern 110, 120, 130, 140, 150 im ersten Netzwerk 100 der Parameter auf den ersten Wert eingestellt werden muss. Im konkreten Beispiel sendet der zweite Netzwerkteilnehmer 120 im zweiten Verfahrensschritt 12 des ersten Verfahrensteils 10 also ein Datentelegramm aus, das die Information enthält, dass bei Verbindungen eine Übertragungsrate von 100 Mbit/s eingestellt werden muss.

Falls das erste Netzwerk 100 ein Ethernet-Netzwerk ist, so kann das durch den zweiten Netzwerkteilnehmer 120 im zweiten Verfahrensschritt 12 des ersten Verfahrensteils 10 ausgesendete Datentelegramm ein spezielles Ethernet-Telegramm sein. Falls das erste Netzwerk 100 ein EtherCAT-Netzwerk ist, so kann das durch den zweiten Netzwerkteilnehmer 120 im zweiten Verfahrensschritt 12 des ersten Verfahrensteils 10 ausgesendete Datentelegramm ein EtherCAT-Telegramm sein, also ein Ethernet-Telegramm mit einem speziellen Ether-Typ.

Der zweite Netzwerkteilnehmer 120 sendet das Datentelegramm im zweiten Verfahrensschritt 12 des ersten Verfahrensteils 10 über alle seine Verbindungen aus, bei denen der Parameter nicht auf den ersten Wert eingestellt ist. Im konkreten Beispiel sendet der zweite Netzwerkteilnehmer 120 das Datentelegramm also über alle Verbindungen aus, bei denen die Übertragungsrate nicht auf 100 Mbit/s eingestellt ist, somit nur über die zweite Verbindung 125 und nicht über die erste Verbindung 115.

In einem dem zweiten Verfahrensschritt 12 zeitlich nachfolgenden dritten Verfahrensschritt 13 des ersten Verfahrensteils 10 trennt der zweite Netzwerkteilnehmer 120 des ersten Netzwerks 100 alle Verbindungen, bei denen der Parameter nicht auf den ersten Wert eingestellt ist, im konkreten Beispiel also die zweite Verbindung 125, bei der die Übertragungsrate nicht auf 100 Mbit/s eingestellt ist.

Anschließend baut der zweite Netzwerkteilnehmer 120 die im dritten Verfahrensschritt 13 getrennten Verbindungen in einem vierten Verfahrensschritt 14 des ersten Verfahrensteils 10 neu auf, wobei der Parameter für die neu aufgebauten Verbindungen auf den ersten Wert eingestellt wird. Im konkreten Beispiel baut der zweite Netzwerkteilnehmer 120 im vierten Verfahrensschritt 14 des ersten Verfahrensteils 10 also die zweite Verbindung 125 zu dem dritten Netzwerkteilnehmer 130 neu auf, wobei eine Übertragungsrate von 100 Mbit/s eingestellt wird.

Die Durchführung des dritten Verfahrensschritt 13 und des vierten Verfahrensschritt 14 des ersten Verfahrensteils 10 durch den zweiten Netzwerkteilnehmer 120 kann eine erhebliche Zeit in Anspruch nehmen, beispielsweise eine Zeit von etwa einer Sekunde.

Der dritte Netzwerkteilnehmer 130 des ersten Netzwerks 100 empfängt in einem ersten Verfahrensschritt 21 des zweiten Verfahrensteils 20 das von dem zweiten Netzwerkteilnehmer 120 im zweiten Verfahrensschritt 12 des ersten Verfahrensteils 10 über die zweite Verbindung 125 ausgesandte Datentelegramm.

In einem zweiten Verfahrensschritt 22 des zweiten Verfahrensteils 20 prüft der dritte Netzwerkteilnehmer 130 anschließend, ob er über weitere Verbindungen zu weiteren Netzwerkteilnehmern verfügt, bei denen der Parameter nicht auf den ersten Wert eingestellt ist. Im konkreten Beispiel prüft der dritte Netzwerkteilnehmer 130 im zweiten Verfahrensschritt 22 des zweiten Verfahrensteils 20, ob er, neben der zweiten Verbindung 125, weitere Verbindungen aufweist, bei denen die Übertragungsrate nicht auf 100 Mbit/s eingestellt ist. Dies ist im konkreten Beispiel bei der dritten Verbindung 135 der Fall.

Nachdem die Prüfung im zweiten Verfahrensschritt 22 des zweiten Verfahrensteils 20 ergeben hat, dass der dritte Netzwerkteilnehmer 130 über weitere Verbindungen zu weiteren Netzwerkteilnehmern verfügt, bei denen der Parameter nicht auf den ersten Wert eingestellt ist, leitet der dritte Netzwerkteilnehmer 130 in einem dritten Verfahrensschritt 23 des zweiten Verfahrensteils 20 das im ersten Verfahrensschritt 21 des zweiten Verfahrensteils 20 empfangene Datentelegramm weiter. Der dritte Netzwerkteilnehmer 130 leitet das Datentelegramm dabei über alle seine Verbindungen weiter, bei denen der Parameter nicht auf den ersten Wert eingestellt ist, außer über jene Verbindung, über die er das Datentelegramm im ersten Verfahrensschritt 21 empfangen hat. Im konkreten Beispiel leitet der dritte Netzwerkteilnehmer 130 das Datentelegramm im dritten Verfahrensschritt 23 des zweiten Verfahrensteils 20 über die dritte Verbindung 135 weiter, nicht aber über die zweite Verbindung 125.

In einem vierten Verfahrensschritt 24 des zweiten Verfahrensteils 20 trennt der dritte Netzwerkteilnehmer 130 alle Verbindungen, bei denen der Parameter nicht auf den ersten Wert eingestellt ist, bis auf jene Verbindung, über die im ersten Verfahrensschritt 21 das Datentelegramm empfangen wurde. Anschließend baut der dritte Netzwerkteilnehmer 130 in einem fünften Verfahrensschritt 25 des zweiten Verfahrensteils 20 alle im vierten Verfahrensschritt 24 getrennten Verbindungen neu auf, wobei der Parameter auf den ersten Wert eingestellt wird. Im konkreten Beispiel trennt der dritte Netzwerkteilnehmer 130 demnach im vierten Verfahrensschritt 24 die dritte Verbindung 135 und baut die dritte Verbindung 135 im fünften Verfahrensschritt 25 des zweiten Verfahrensteils 20 neu auf, wobei eine Übertragungsrate von 100 Mbit/s eingestellt wird.

Die Durchführung des vierten Verfahrensschritts 24 und des fünften Verfahrensschritts 25 des zweiten Verfahrensteils 20 durch den dritten Netzwerkteilnehmer 130 kann eine erhebliche Zeit in Anspruch nehmen, beispielsweise eine Zeit von etwa einer Sekunde. Allerdings erfolgt die Durchführung des vierten Verfahrensschritts 24 und des fünften Verfahrensschritts 25 des zweiten Verfahrensteils 20, also die Trennung und der Neuaufbau der dritten Verbindung 135, im Wesentlichen parallel zur Durchführung des dritten Verfahrensschritts 13 und des vierten Verfahrensschritts 14 des ersten Verfahrensteils 10 durch den zweiten Netzwerkteilnehmer 120, also zur Trennung und zum Neuaufbau der zweiten Verbindung 125. Dadurch fällt die für Trennung und Neuaufbau einer Verbindung benötigte Zeit im Wesentlichen nur einmal an.

Der zweite Verfahrensteil 20 wird auch durch den vierten Netzwerkteilnehmer 140 und den fünften Netzwerkteilnehmer 150 des ersten Netzwerks 100 durchgeführt. Der vierte Netzwerkteilnehmer 140 des ersten Netzwerks 100 empfängt im ersten Verfahrensschritt 21 des zweiten Verfahrensteils 20 über die dritte Verbindung 135 das von dem dritten Netzwerkteilnehmer 130 ausgesandte Datentelegramm. Im zweiten Verfahrensschritt 22 des zweiten Verfahrensteils 20 prüft der vierte Netzwerkteilnehmer 140, ob bei weiteren Verbindungen des vierten Netzwerkteilnehmers 140 die Übertragungsrate auf einen anderen Wert als 100 Mbit/s eingestellt ist. Dies ist bei der vierten Verbindung 145 der Fall. Daher leitet der vierte Netzwerkteilnehmer 140 im dritten Verfahrensschritt 23 des zweiten Verfahrensteils 20 das zuvor empfangene Datentelegramm über die vierte Verbindung 145 weiter. Anschließend trennt der vierte Netzwerkteilnehmer 140 im vierten Verfahrensschritt 24 des zweiten Verfahrensteils 20 die vierte Verbindung 145, um sie anschließend im fünften Verfahrensschritt 25 des zweiten Verfahrensteils 20 neu aufzubauen, wobei eine Übertragungsrate von 100 Mbit/s eingestellt wird.

Die Trennung und der Neuaufbau der vierten Verbindung 145 durch den vierten Netzwerkteilnehmer 140 erfolgen im Wesentlichen parallel zur Trennung und dem Neuaufbau der zweiten Verbindung 125 durch den zweiten Netzwerkteilnehmer 120 und zur Trennung und dem Neuaufbau der dritten Verbindung 135 durch den dritten Netzwerkteilnehmer 130.

Der fünfte Netzwerkteilnehmer 150 des ersten Netzwerks 100 empfängt im ersten Verfahrensschritt 21 des zweiten Verfahrensteils 20 das durch den vierten Netzwerkteilnehmer 140 über die vierte Verbindung 145 ausgesandte Datentelegramm. Im zweiten Verfahrensschritt 22 des zweiten Verfahrensteils 20 prüft der fünfte Netzwerkteilnehmer 150, ob er über weitere Verbindungen verfügt, bei denen eine andere Übertragungsrate als 100 Mbit/s eingestellt ist. Dies ist nicht der Fall. Daher setzt der fünfte Netzwerkteilnehmer 150 die Durchführung des zweiten Verfahrensteils 20 anschließend nicht weiter fort.

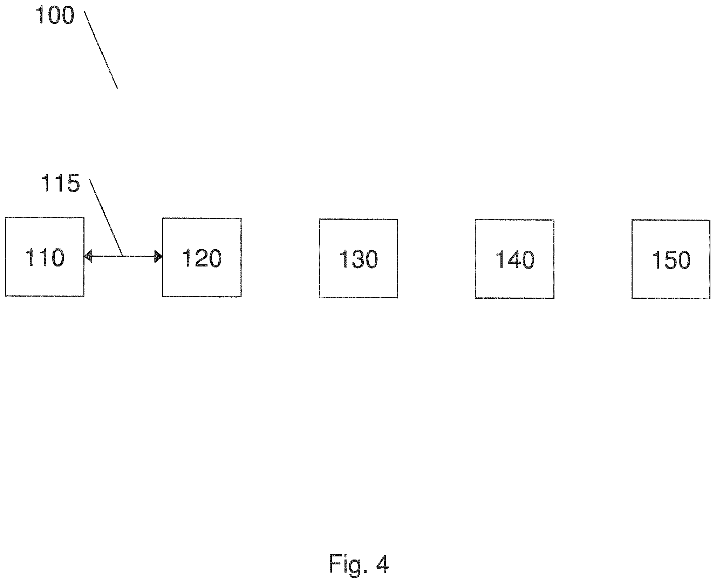

Fig. 4 zeigt eine schematische Darstellung des ersten Netzwerks 100 nach der Trennung der zweiten Verbindung 125, der dritten Verbindung 135 und der vierten Verbindung 145 durch den zweiten Netzwerkteilnehmer 120, den dritten Netzwerkteilnehmer 130 und den vierten Netzwerkteilnehmer 140 im dritten Verfahrensschritt 13 des ersten Verfahrensteils 10 und dem vierten Verfahrensschritt 24 des zweiten Verfahrensteils 20. Die Trennung der Verbindungen 125, 135, 145 ist im Wesentlichen parallel erfolgt.

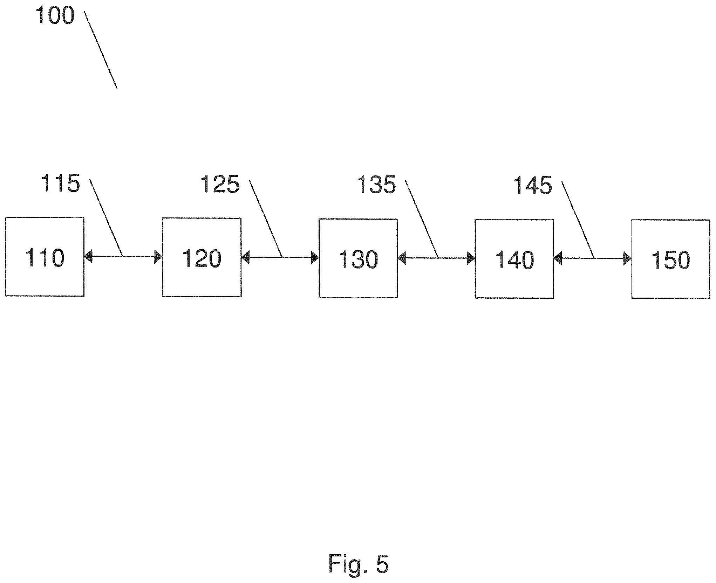

Fig. 5 zeigt eine schematische Darstellung des ersten Netzwerks 100 nach dem Neuaufbau der zweiten Verbindung 125, der dritten Verbindung 135 und der vierten Verbindung 145 durch den zweiten Netzwerkteilnehmer 120, den dritten Netzwerkteilnehmer 130 und den vierten Netzwerkteilnehmer 140 im vierten Verfahrensschritt 14 des ersten Verfahrensteils 10 und dem fünften Verfahrensschritt 25 des zweiten Verfahrensteils 20. Die zweite Verbindung 125, die dritte Verbindung 135 und die vierte Verbindung 145 wurden jeweils mit einer eingestellten Übertragungsrate von 100 Mbit/s neu aufgebaut. Der Neuaufbau der zweiten Verbindung 125, der dritten Verbindung 135 und der vierten Verbindung 145 ist im Wesentlichen parallel erfolgt.

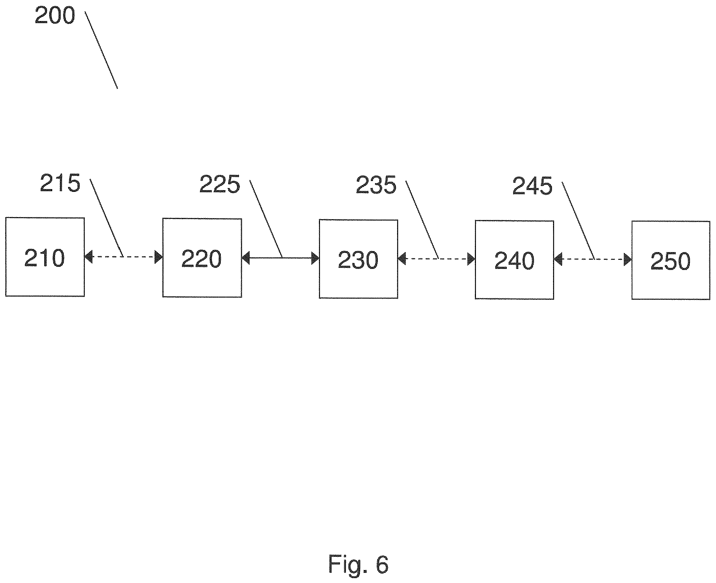

Fig. 6 zeigt eine schematische Darstellung eines zweiten Netzwerks 200 mit einem ersten Netzwerkteilnehmer 210, einem zweiten Netzwerkteilnehmer 220, einem dritten Netzwerkteilnehmer 230, einem vierten Netzwerkteilnehmer 240 und einem fünften Netzwerkteilnehmer 250. Der erste Netzwerkteilnehmer 210 ist über eine erste Verbindung 215 mit dem zweiten Netzwerkteilnehmer 220 verbunden. Der zweite Netzwerkteilnehmer 220 ist über eine zweite Verbindung 225 mit dem dritten Netzwerkteilnehmer 230 verbunden. Der dritte Netzwerkteilnehmer 230 ist über eine dritte Verbindung 235 mit dem vierten Netzwerkteilnehmer 240 verbunden. Der vierte Netzwerkteilnehmer 240 ist über eine vierte Verbindung 245 mit dem fünften Netzwerkteilnehmer 250 verbunden. Das zweite Netzwerk 220 kann beispielsweise auf dem Ethernet-Standard basieren, insbesondere beispielsweise auch auf dem EtherCAT-Standard.

Auch beim zweiten Netzwerk 200 können für einen oder mehrere Parameter der Verbindungen 215, 225, 235, 245 jeweils unterschiedliche Werte eingestellt werden. Im in Fig. 6 dargestellten Beispiel unterscheiden sich wieder die für die einzelnen Verbindungen 215, 225, 235, 245 eingestellten Übertragungsraten. Die Verbindungen 215, 225, 235, 245 könnten sich allerdings alternativ oder zusätzlich auch in den Werten eines anderen Parameters unterscheiden. Für die erste Verbindung 215, die dritte Verbindung 235 und die vierte Verbindung 245 ist eine Übertragungsrate von 1 Gbit/s eingestellt. Für die zweite Verbindung 225 ist eine Übertragungsrate von 100 Mbit/s eingestellt. Die Übertragungsraten wurden bei der Herstellung der Verbindungen 215, 225, 235, 245 zufällig ausgewählt.

Im dargestellten Beispiel soll es erforderlich sein, die für die einzelnen Verbindungen 215, 225, 235, 245 gewählten Übertragungsraten einander dahingehend anzugleichen, dass für alle Verbindungen 215, 225, 235, 245 eine Datenrate von 100 Mbit/s eingestellt ist. Hierzu dient das anhand der Figuren 2 und 3 erläuterte Verfahren mit dem ersten Verfahrensteil 10 und dem zweiten Verfahrensteil 20.

Der zweite Netzwerkteilnehmer 220 des zweiten Netzwerks erkennt im ersten Verfahrensschritt 11 des ersten Verfahrensteils 10, dass bei der zweiten Verbindung 225 eine Geschwindigkeit von 100 Mbit/s eingestellt ist, während bei der ersten Verbindung 215 eine Geschwindigkeit von 1 Gbit/s eingestellt ist. Im zweiten Verfahrensschritt 12 des ersten Verfahrensteils 10 sendet der zweite Netzwerkteilnehmer 220 über die erste Verbindung 215 ein Datentelegramm aus, das die Information enthält, dass bei Verbindungen die Übertragungsrate auf 100 Mbit/s eingestellt werden muss. Im dritten Verfahrensschritt 13 des ersten Verfahrensteils 10 trennt der zweite Netzwerkteilnehmer 220 die erste Verbindung 215 und baut sie anschließend im vierten Verfahrensschritt 14 des ersten Verfahrensteils 10 neu auf, wobei die Übertragungsrate auf 100 Mbit/s gesetzt wird.

Auch der dritte Netzwerkteilnehmer 230 des zweiten Netzwerks 220 führt den ersten Verfahrensteil 10 durch. Im ersten Verfahrensschritt 11 erkennt der dritte Netzwerkteilnehmer 230 des zweiten Netzwerks 200, dass für die zweite Verbindung 225 eine Datenrate von 100 Mbit/s eingestellt ist, während für die dritte Verbindung 235 eine Datenrate von 1 Gbit/s eingestellt ist. Darauf sendet der dritte Netzwerkteilnehmer 230 im zweiten Verfahrensschritt 12 des ersten Verfahrensteils 10 über die dritte Verbindung 235 ein Datentelegramm aus, das die Information enthält, dass bei Verbindungen die Übertragungsrate auf 100 Mbit/s eingestellt werden muss. Dann trennt der dritte Netzwerkteilnehmer 230 im dritten Verfahrensschritt 13 des ersten Verfahrensteils 10 die dritte Verbindung 235 und baut sie im vierten Verfahrensschritt 14 des ersten Verfahrensteils 10 neu auf, wobei die Übertragungsrate auf 100 Mbit/s eingestellt wird.

Der erste Netzwerkteilnehmer 210 des zweiten Netzwerks 200 führt den zweiten Verfahrensteil 20 durch. Im ersten Verfahrensschritt 21 des zweiten Verfahrensteils 20 empfängt der erste Netzwerkteilnehmer 210 über die erste Verbindung 215 das von dem zweiten Netzwerkteilnehmer 220 ausgesandte Datentelegramm. Im zweiten Verfahrensschritt 22 des zweiten Verfahrensteils 20 prüft der erste Netzwerkteilnehmer 210, ob er über weitere Verbindungen zu weiteren Netzwerkteilnehmern verfügt, bei denen die Übertragungsrate nicht auf 100 Mbit/s eingestellt ist. Da dies nicht der Fall ist, beendet der erste Netzwerkteilnehmer 210 anschließend die Durchführung des zweiten Verfahrensteils 20.

Der vierte Netzwerkteilnehmer 240 des zweiten Netzwerks 200 führt ebenfalls den zweiten Verfahrensteil 20 durch. Im ersten Verfahrensschritt 21 des zweiten Verfahrensteils 20 empfängt der vierte Netzwerkteilnehmer 240 das durch den dritten Netzwerkteilnehmer 230 über die dritte Verbindung 235 ausgesandte Datentelegramm. Anschließend prüft der vierte Netzwerkteilnehmer 240 im zweiten Verfahrensschritt 22 des zweiten Verfahrensteils 20, ob er über weitere Verbindungen zu weiteren Netzwerkteilnehmern des zweiten Netzwerks 200 verfügt, bei denen die Übertragungsrate nicht auf 100 Mbit/s eingestellt ist. Dies ist bei der vierten Verbindung 245 zu dem fünften Netzwerkteilnehmer 250 der Fall. Daher leitet der vierte Netzwerkteilnehmer 240 des zweiten Netzwerks im dritten Verfahrensschritt 23 des zweiten Verfahrensteils 20 das im ersten Verfahrensschritt 21 empfangene Datentelegramm über die vierte Verbindung 245 weiter. Anschließend trennt der vierte Netzwerkteilnehmer 240 im vierten Verfahrensschritt 24 des zweiten Verfahrensteils 20 die vierte Verbindung 245, um sie im fünften Verfahrensschritt 25 des zweiten Verfahrensteils 20 neu aufzubauen. Dabei wird die Übertragungsrate auf 100 Mbit/s eingestellt.

Der fünfte Netzwerkteilnehmer 250 des zweiten Netzwerks 200 führt ebenfalls den zweiten Verfahrensteil 20 durch. Im ersten Verfahrensschritt 21 empfängt der fünfte Netzwerkteilnehmer 250 das von dem vierten Netzwerkteilnehmer 240 über die vierte Verbindung 245 ausgesandte Datentelegramm. Im zweiten Verfahrensschritt 22 des zweiten Verfahrensteils 20 prüft der fünfte Netzwerkteilnehmer 250, ob er über weitere Verbindungen zu weiteren Netzwerkteilnehmern des zweiten Netzwerks 200 verfügt, bei denen die Übertragungsrate nicht auf 100 Mbit/s eingestellt ist. Dies ist nicht der Fall, da der fünfte Netzwerkteilnehmer 250 außer der vierten Verbindung 245 zum vierten Netzwerkteilnehmer 240 keine weiteren Verbindungen aufweist. Daher beendet der fünfte Netzwerkteilnehmer 250 die Durchführung des zweiten Verfahrensteils 20.

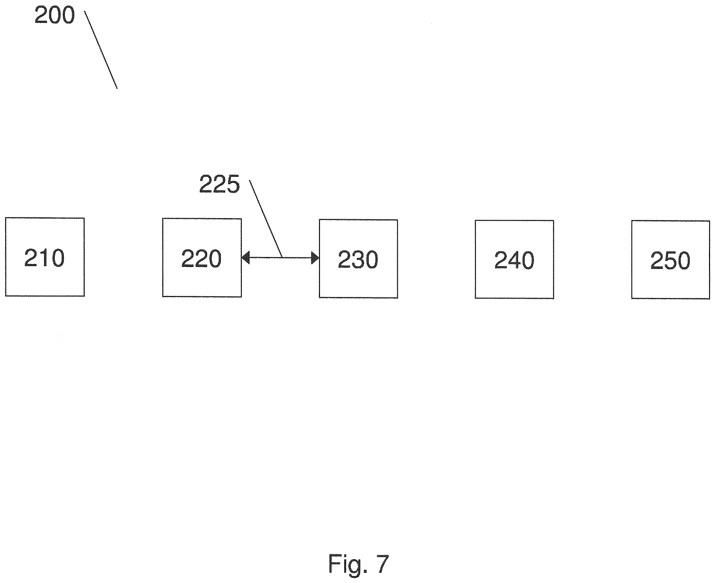

Die Trennung der ersten Verbindung 215, der dritten Verbindung 235 und der vierten Verbindung 245 durch den zweiten Netzwerkteilnehmer 220, den dritten Netzwerkteilnehmer 230 und den vierten Netzwerkteilnehmer 240 des zweiten Netzwerks 200 erfolgt im Wesentlichen parallel zueinander. Fig. 7 zeigt eine schematische Darstellung des zweiten Netzwerks 200 nach dem Trennen der ersten Verbindung 215, der dritten Verbindung 235 und der vierten Verbindung 245.

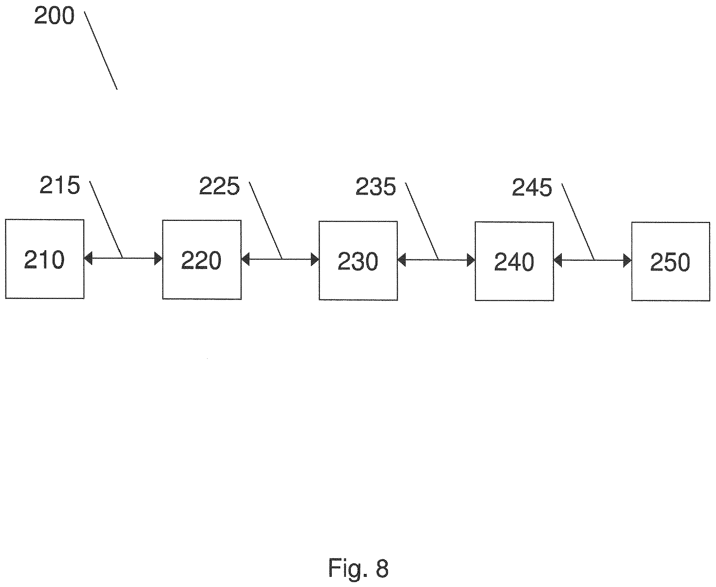

Auch der Neuaufbau der ersten Verbindung 215, der dritten Verbindung 235 und der vierten Verbindung 245 durch den zweiten Netzwerkteilnehmer 220, den dritten Netzwerkteilnehmer 230 und den vierten Netzwerkteilnehmer 240 des zweiten Netzwerks 200 erfolgt im Wesentlichen parallel zueinander. Fig. 8 zeigt eine schematische Darstellung des zweiten Netzwerks 200 nach dem Neuaufbau der ersten Verbindung 215, der dritten Verbindung 235 und der vierten Verbindung 245. Die erste Verbindung 215, die dritte Verbindung 235 und die vierte Verbindung 245 sind auf eine Übertragungsrate von 100 Mbit/s eingestellt worden, wodurch der für diesen Parameter eingestellte Wert dem für diesen Parameter eingestellten Wert bei der zweiten Verbindung 225 des zweiten Netzwerks 200 entspricht.

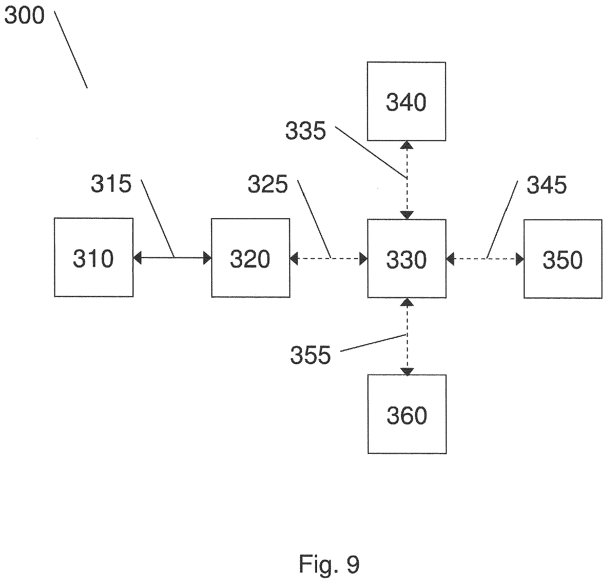

Fig. 9 zeigt eine schematische Darstellung eines dritten Netzwerks 300. Das dritte Netzwerk 300 kann, wie das erste Netzwerk 100 und das zweite Netzwerk 200, beispielsweise ein Netzwerk nach dem Ethernet-Standard sein, insbesondere ein Netzwerk nach dem EtherCAT-Standard.

Im Unterschied zu dem ersten Netzwerk 100 und dem zweiten Netzwerk 200 weist das dritte Netzwerk 300 allerdings teilweise eine Baum-Topologie auf. Das dritte Netzwerk 300 umfasst einen ersten Netzwerkteilnehmer 310, einen zweiten Netzwerkteilnehmer 320, einen dritten Netzwerkteilnehmer 330, einen vierten Netzwerkteilnehmer 340, einen fünften Netzwerkteilnehmer 350 und einen sechsten Netzwerkteilnehmer 360. Der erste Netzwerkteilnehmer 310 ist über eine erste Verbindung 315 mit dem zweiten Netzwerkteilnehmer 320 verbunden. Der zweite Netzwerkteilnehmer 320 ist über eine zweite Verbindung 325 mit dem dritten Netzwerkteilnehmer 330 verbunden. Der dritte Netzwerkteilnehmer 330 ist über eine dritte Verbindung 335 mit dem vierten Netzwerkteilnehmer 340 verbunden. Außerdem ist der dritte Netzwerkteilnehmer 330 über eine vierte Verbindung 345 mit dem fünften Netzwerkteilnehmer 350 verbunden. Außerdem ist der dritte Netzwerkteilnehmer 330 über eine fünfte Verbindung 355 mit dem sechsten Netzwerkteilnehmer 360 verbunden. Der dritte Netzwerkteilnehmer 330 verfügt somit über insgesamt vier Verbindungen 325, 335, 345, 355.

Wiederum können bei jeder der Verbindungen 315, 325, 335, 345, 355 für einen oder mehrere Parameter jeweils mehrere unterschiedliche Werte eingestellt werden. Im dargestellten Beispiel wird wiederum angenommen, dass es sich bei dem Parameter um eine Übertragungsrate der jeweiligen Verbindung 315, 325, 335, 345, 355 handelt und diese die Werte 100 Mbit/s und 1 Gbit/s annehmen kann.

Im dargestellten Beispiel unterstützt der erste Netzwerkteilnehmer 310 lediglich eine Übertragungsrate von 100 Mbit/s, während der zweite Netzwerkteilnehmer 320, der dritte Netzwerkteilnehmer 330, der vierte Netzwerkteilnehmer 340, der fünfte Netzwerkteilnehmer 350 und der sechste Netzwerkteilnehmer 360 jeweils Übertragungsraten von 100 Mbit/s und 1 Gbit/s unterstützen. Beim Herstellen der Verbindungen 315, 325, 335, 345, 355 des dritten Netzwerks 300 wurden die zweite Verbindung 325, die dritte Verbindung 335, die vierte Verbindung 345 und die fünfte Verbindung 355 mit einer Übertragungsrate von 1 Gbit/s hergestellt, während die erste Verbindung 315 mit einer Übertragungsrate von 100 Mbit/s hergestellt wurde.

Zum störungsfreien Betrieb des dritten Netzwerks 300 ist es erforderlich, die Übertragungsraten aller Verbindungen 315, 325, 335, 345, 355 einander anzugleichen, indem die zweite Verbindung 325, die dritte Verbindung 335, die vierte Verbindung 345 und die fünfte Verbindung 355 auf eine Übertragungsrate von 100 Mbit/s eingestellt werden. Hierzu dient ein Verfahren, das die schematisch in Figuren 2 und 3 dargestellten Verfahrensteile 10, 20 umfasst.

Der zweite Netzwerkteilnehmer 320 des dritten Netzwerks 300 führt den ersten Verfahrensteil 10 durch. Im ersten Verfahrensschritt 11 des ersten Verfahrensteils 10 erkennt der zweite Netzwerkteilnehmer 320, dass die Übertragungsrate bei der ersten Verbindung 315 auf den Wert 100 Mbit/s eingestellt ist, während sie bei der zweiten Verbindung 325 auf den Wert 1 Gbit/s eingestellt ist. Im zweiten Verfahrensschritt 12 des ersten Verfahrensteils 10 sendet der zweite Netzwerkteilnehmer 320 des dritten Netzwerks 300 über die zweite Verbindung 325 ein Datentelegramm aus, das die Information enthält, dass bei Verbindungen die Übertragungsrate auf den Wert 100 Mbit/s eingestellt werden muss. Im dritten Verfahrensschritt 13 des ersten Verfahrensteils 10 trennt der zweite Netzwerkteilnehmer 320 die zweite Verbindung 325, um die zweite Verbindung 325 anschließend im vierten Verfahrensschritt 14 des ersten Verfahrensteils 10 neu aufzubauen, wobei die Übertragungsrate auf 100 Mbit/s eingestellt wird.

Der dritte Netzwerkteilnehmer 330 des dritten Netzwerks 300 führt den zweiten Verfahrensteil 20 durch. Im ersten Verfahrensschritt 21 des zweiten Verfahrensteils 20 empfängt der dritte Netzwerkteilnehmer 330 das vom zweiten Netzwerkteilnehmer 320 über die zweite Verbindung 325 ausgesandte Datentelegramm. Im zweiten Verfahrensschritt 22 des zweiten Verfahrensteils 20 prüft der dritte Netzwerkteilnehmer 330 des dritten Netzwerks 300, ob er über weitere Verbindungen verfügt, bei denen die Übertragungsrate nicht auf 100 Mbit/s eingestellt ist. Dies trifft für die dritte Verbindung 335, die vierte Verbindung 345 und die fünfte Verbindung 355 zu. Daher leitet der dritte Netzwerkteilnehmer 330 im dritten Verfahrensschritt 23 des zweiten Verfahrensteils 20 das zuvor empfangene Datentelegramm über die dritte Verbindung 335, die vierte Verbindung 345 und die fünfte Verbindung 355 weiter.

Im vierten Verfahrensschritt 24 des zweiten Verfahrensteils 20 trennt der dritte Netzwerkteilnehmer 330 die dritte Verbindung 335, die vierte Verbindung 345 und die fünfte Verbindung 355, um anschließend im fünften Verfahrensschritt 25 des zweiten Verfahrensteils 20 die dritte Verbindung 335, die vierte Verbindung 345 und die fünfte Verbindung 355 neu aufzubauen. Dabei bewirkt der dritte Netzwerkteilnehmer 330, dass die dritte Verbindung 335, die vierte Verbindung 345 und die fünfte Verbindung 355 auf eine Übertragungsrate von 100 Mbit/s eingestellt werden.

Der vierte Netzwerkteilnehmer 340, der fünfte Netzwerkteilnehmer 350 und der sechste Netzwerkteilnehmer 360 des dritten Netzwerks 300 führen jeweils den zweiten Verfahrensteil 20 durch. Dabei empfangen der vierte Netzwerkteilnehmer 340, der fünfte Netzwerkteilnehmer 350 und der sechste Netzwerkteilnehmer 360 im ersten Verfahrensschritt 21 des zweiten Verfahrensteils 20 das von dem dritten Netzwerkteilnehmer 330 ausgesandte Datentelegramm über die dritte Verbindung 335, die vierte Verbindung 345 und die fünfte Verbindung 355. Im zweiten Verfahrensschritt 22 des zweiten Verfahrensteils 20 prüfen der vierte Netzwerkteilnehmer 340, der fünfte Netzwerkteilnehmer 350 und der sechste Netzwerkteilnehmer 360 des dritten Netzwerks, ob sie über weitere Verbindungen verfügen, bei denen die Übertragungsrate nicht auf 100 Mbit/s eingestellt ist. Da dies nicht der Fall ist, beenden der vierte Netzwerkteilnehmer 340, der fünfte Netzwerkteilnehmer 350 und der sechste Netzwerkteilnehmer 360 des dritten Netzwerks 300 anschließend die Durchführung des zweiten Verfahrensteils 20.

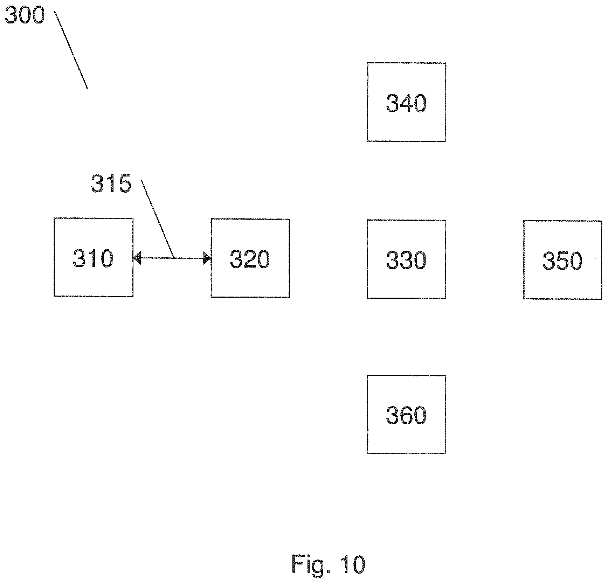

Die Trennung der zweiten Verbindung 325 durch den zweiten Netzwerkteilnehmer 320 des dritten Netzwerks 300 und die Trennung der dritten Verbindung 335, der vierten Verbindung 345 und der fünften Verbindung 355 durch den dritten Netzwerkteilnehmer 330 des dritten Netzwerks 300 erfolgen im Wesentlichen parallel zueinander. Fig. 10 zeigt eine schematische Darstellung des dritten Netzwerks 300 nach dem Trennen der zweiten Verbindung 325, der dritten Verbindung 335, der vierten Verbindung 345 und der fünften Verbindung 355.

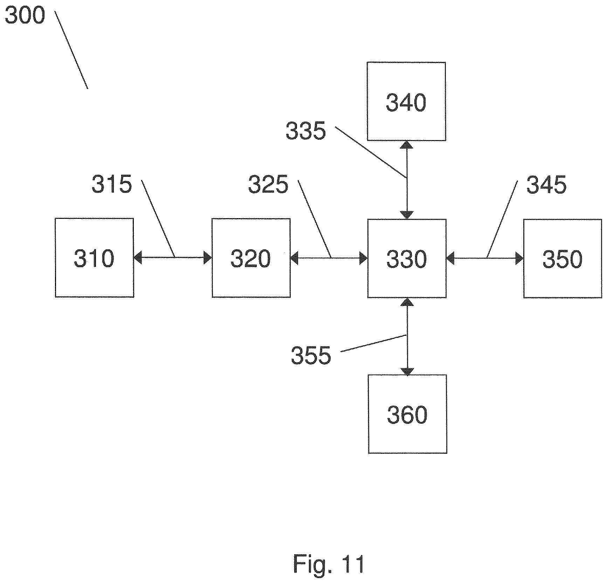

Auch der Neuaufbau der zweiten Verbindung 325 durch den zweiten Netzwerkteilnehmer 320 und der Neuaufbau der dritten Verbindung 335, der vierten Verbindung 345 und der fünften Verbindung 355 durch den dritten Netzwerkteilnehmer 330 erfolgen im Wesentlichen parallel zueinander. Fig. 11 zeigt eine schematische Darstellung des dritten Netzwerks 300 nach dem Neuaufbau der zweiten Verbindung 325, der dritten Verbindung 335, der vierten Verbindung 345 und der fünften Verbindung 355. Im in Fig. 11 gezeigten Zustand des dritten Netzwerks 300 ist für alle Verbindungen 315, 325, 335, 345, 355 des dritten Netzwerks 300 eine Übertragungsrate von 100 Mbit/s eingestellt.

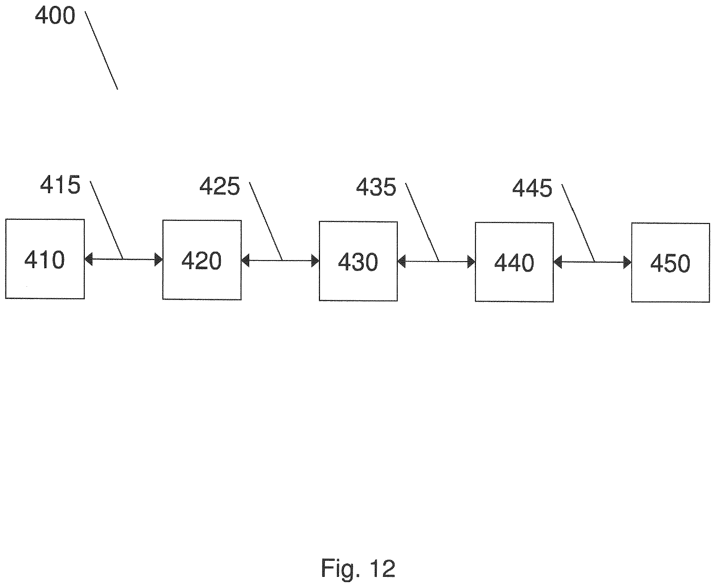

Fig. 12 zeigt eine schematische Darstellung eines vierten Netzwerks 400. Auch das vierte Netzwerk 400 kann beispielsweise ein auf dem Ethernet-Standard basierendes Netzwerk sein, insbesondere ein auf dem EtherCAT-Standard basierendes Netzwerk.

Das vierte Netzwerk 400 umfasst einen ersten Netzwerkteilnehmer 410, einen zweiten Netzwerkteilnehmer 420, einen dritten Netzwerkteilnehmer 430, einen vierten Netzwerkteilnehmer 440 und einen fünften Netzwerkteilnehmer 450. Zwischen dem ersten Netzwerkteilnehmer 410 und dem zweiten Netzwerkteilnehmer 420 besteht eine erste Verbindung 415. Zwischen dem zweiten Netzwerkteilnehmer 420 und dem dritten Netzwerkteilnehmer 430 besteht eine zweite Verbindung 425. Zwischen dem dritten Netzwerkteilnehmer 430 und dem vierten Netzwerkteilnehmer 440 besteht eine dritte Verbindung 435. Zwischen dem vierten Netzwerkteilnehmer 440 und dem fünften Netzwerkteilnehmer 450 besteht eine vierte Verbindung 445.

Der erste Netzwerkteilnehmer 410 kann ausgebildet sein wie der zweite Netzwerkteilnehmer 420, der dritte Netzwerkteilnehmer 430, der vierte Netzwerkteilnehmer 440 und der fünfte Netzwerkteilnehmer 450 des vierten Netzwerks 400. Bei dem ersten Netzwerkteilnehmer 410 kann es sich allerdings auch um einen besonderen Netzwerkteilnehmer des vierten Netzwerks 400 handeln, beispielsweise um einen Master-Netzwerkteilnehmer.

Auch beim vierten Netzwerk 400 gibt es für jede der Verbindungen 415, 425, 435, 445 einen oder mehrere Parameter, die auf unterschiedliche Werte eingestellt werden können. Allerdings sind beim vierten Netzwerk 400 im in Fig. 12 dargestellten Beispiel bereits alle solchen Parameter bei allen Verbindungen 415, 425, 435, 445 auf jeweils einheitliche Werte eingestellt. Beispielsweise können bei dem vierten Netzwerk 400 alle Verbindungen 415, 425, 435, 445 auf eine Übertragungsrate von 100 Mbit/s eingestellt sein.

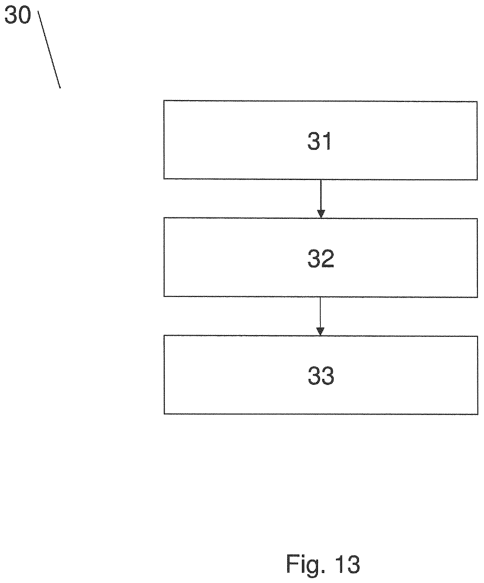

Bei dem vierten Netzwerk 400 soll der Wert eines Parameters für alle Verbindungen 415, 425, 435, 445 geändert werden. Beispielhaft soll die Übertragungsrate aller Verbindungen 415, 425, 435, 445 von 100 Mbit/s auf 1 Gbit/s angehoben werden. Dies erfolgt durch ein Verfahren, das den in Fig. 2 dargestellten zweiten Verfahrensteil 20 und einen in Fig. 13 als schematisches Ablaufdiagramm dargestellten dritten Verfahrensteil 30 umfasst.

Der erste Netzwerkteilnehmer 410 stößt die Umschaltung hierbei an, indem er den dritten Verfahrensteil 30 durchführt. In einem ersten Verfahrensschritt 31 des dritten Verfahrensteils 30 sendet der erste Netzwerkteilnehmer 410 über die erste Verbindung 415 ein Datentelegramm aus, das die Information enthält, dass bei Verbindungen zwischen Netzwerkteilnehmern des vierten Netzwerks 400 ein Parameter auf einen ersten Wert eingestellt werden muss. Im konkreten Beispiel enthält das Datentelegramm also die Information, dass bei Verbindungen die Übertragungsrate auf den Wert 1 Gbit/s eingestellt werden muss.

Da auch bei der ersten Verbindung 415 des ersten Netzwerkteilnehmers 410 des vierten Netzwerks 400 der Parameter nicht den ersten Wert aufweist, die Übertragungsrate also nicht auf 1 Gbit/s eingestellt ist, führt der erste Netzwerkteilnehmer 410 anschließend einen zweiten Verfahrensschritt 32 des dritten Verfahrensteils 30 aus, bei dem der erste Netzwerkteilnehmer 410 die erste Verbindung 415 trennt. Anschließend baut der erste Netzwerkteilnehmer 410 in einem dritten Verfahrensschritt 33 des dritten Verfahrensteils 30 die erste Verbindung 415 neu auf, wobei der Parameter auf den ersten Wert eingestellt wird, also eine Übertragungsrate von 1 Gbit/s gewählt wird.

Wäre für die erste Verbindung 415 bereits zu Beginn der Durchführung des dritten Verfahrensteils 30 eine Übertragungsrate von 1 Gbit/s eingestellt gewesen, so hätten der zweite Verfahrensschritt 32 und der dritte Verfahrensschritt 33 des dritten Verfahrensteils 30 entfallen können.

Der zweite Netzwerkteilnehmer 420 führt den zweiten Verfahrensteil 20 durch. Dabei empfängt der zweite Netzwerkteilnehmer 420 im ersten Verfahrensschritt 21 des zweiten Verfahrensteils 20 das von dem ersten Netzwerkteilnehmer 410 ausgesandte Datentelegramm, das die Information enthält, dass bei Verbindungen die Übertragungsrate auf 1 Gbit/s eingestellt werden muss. Im zweiten Verfahrensschritt 22 des zweiten Verfahrensteils 20 prüft der zweite Netzwerkteilnehmer 420, ob er über weitere Verbindungen zu weiteren Netzwerkteilnehmern des vierten Netzwerks 400 verfügt, bei denen die Übertragungsrate nicht auf 1 Gbit/s eingestellt ist. Dies trifft auf die zweite Verbindung 425 zu. Daher leitet der zweite Netzwerkteilnehmer 420 im dritten Verfahrensschritt 23 des zweiten Verfahrensteils 20 das von dem ersten Netzwerkteilnehmer 410 empfangene Datentelegramm über die zweite Verbindung 425 weiter. Im vierten Verfahrensschritt 24 des zweiten Verfahrensteils 20 trennt der zweite Netzwerkteilnehmer 420 die zweite Verbindung 425 und baut sie anschließend im fünften Verfahrensschritt 25 des zweiten Verfahrensteils 20 neu auf, wobei die Übertragungsrate auf den Wert 1 Gbit/s eingestellt wird.

Der dritte Netzwerkteilnehmer 430 und der vierte Netzwerkteilnehmer 440 des vierten Netzwerks 400 führen den zweiten Verfahrensteil 20 in analoger Weise durch.

Auch der fünfte Netzwerkteilnehmer 450 des vierten Netzwerks 400 führt den zweiten Verfahrensteil 20 durch, stellt jedoch im zweiten Verfahrensschritt 22 fest, dass er nicht über weitere Verbindungen verfügt, bei denen die Übertragungsrate nicht auf 1 Gbit/s eingestellt ist. Daher beendet der fünfte Netzwerkteilnehmer 450 die Durchführung des zweiten Verfahrensteils 20 nach dem zweiten Verfahrensschritt 22.

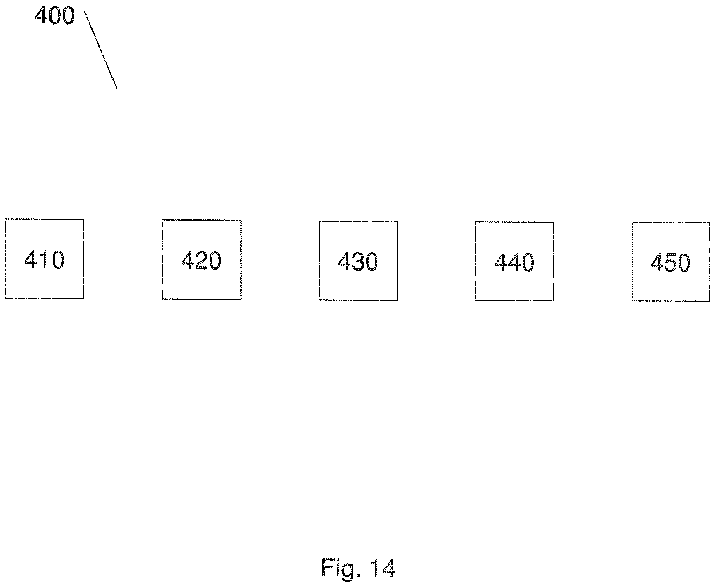

Die Trennung der ersten Verbindung 415 durch den ersten Netzwerkteilnehmer 410, die Trennung der zweiten Verbindung 425 durch den zweiten Netzwerkteilnehmer 420, die Trennung der dritten Verbindung 435 durch den dritten Netzwerkteilnehmer 430 und die Trennung der vierten Verbindung 445 durch den vierten Netzwerkteilnehmer 440 erfolgt im Wesentlichen parallel zueinander. Fig. 14 zeigt eine schematische Darstellung des vierten Netzwerks 400 nach der Trennung der ersten Verbindung 415, der zweiten Verbindung 425, der dritten Verbindung 435 und der vierten Verbindung 445.

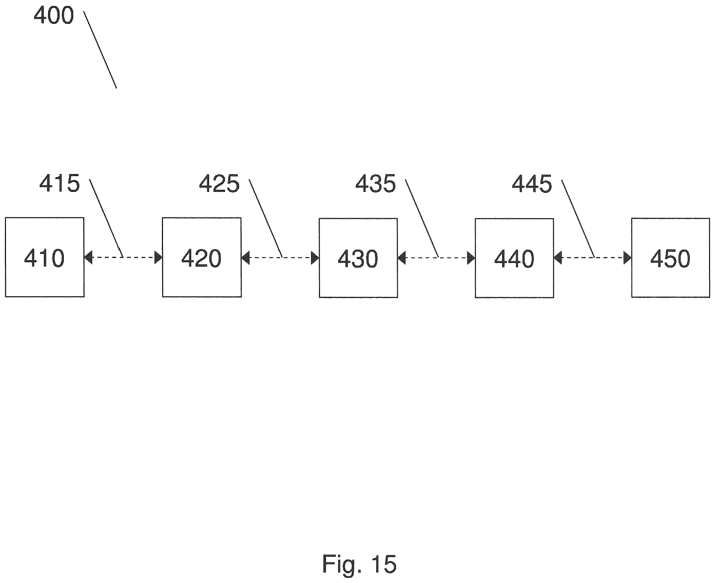

Auch die Wiederherstellung der ersten Verbindung 415 durch den ersten Netzwerkteilnehmer 410, der zweiten Verbindung 425 durch den zweiten Netzwerkteilnehmer 420, der dritten Verbindung 435 durch den dritten Netzwerkteilnehmer 430 und der vierten Verbindung 445 durch den vierten Netzwerkteilnehmer 440 erfolgt im Wesentlichen parallel zueinander. Fig. 15 zeigt eine schematische Darstellung des vierten Netzwerks 400 nach dem Neuaufbau der ersten Verbindung 415, der zweiten Verbindung 425, der dritten Verbindung 435 und der vierten Verbindung 445. Alle Verbindungen 415, 425, 435, 445 sind nun auf eine Übertragungsrate von 1 Gbit/s eingestellt.

Bei den anhand der Figuren 1 bis 11 erläuterten Beispielen wurde die Umschaltung des Werts eines Parameters der Verbindungen in den Netzwerken durch die Erkennung ausgelöst, dass der Parameter bei unterschiedlichen Verbindungen unterschiedliche Werte aufweist (erster Verfahrensschritt 11 des ersten Verfahrensteils). Im Unterschied dazu wurde die Umschaltung bei dem anhand der Figuren 12 bis 15 erläuterten Beispiel durch einen Netzwerkteilnehmer ausgelöst, ohne dass unterschiedliche Werte des Parameters vorliegen mussten (erster Verfahrensschritt 31 des dritten Verfahrensteils). In allen Beispielen wurde erfindungsgemäß die Information über die erforderliche Umschaltung des Werts des Parameters zuerst im Netzwerk weitergereicht, bevor die Umschaltung vorgenommen wurde.

### Bezugszeichenliste

- 10: erster Verfahrensteil
- 11: erster Verfahrenschritt
- 12: zweiter Verfahrenschritt
- 13: dritter Verfahrenschritt
- 14: vierter Verfahrenschritt

- 20: zweiter Verfahrensteil
- 21: erster Verfahrenschritt
- 22: zweiter Verfahrenschritt
- 23: dritter Verfahrenschritt
- 24: vierter Verfahrenschritt
- 25: fünfter Verfahrenschritt

- 30: dritter Verfahrensteil
- 31: erster Verfahrenschritt
- 32: zweiter Verfahrenschritt
- 33: dritter Verfahrenschritt

- 100: erstes Netzwerk
- 110: erster Netzwerkteilnehmer
- 115: erste Verbindung
- 120: zweiter Netzwerkteilnehmer
- 125: zweite Verbindung
- 130: dritter Netzwerkteilnehmer
- 135: dritte Verbindung
- 140: vierter Netzwerkteilnehmer
- 145: vierte Verbindung
- 150: fünfter Netzwerkteilnehmer

- 200: zweites Netzwerk
- 210: erster Netzwerkteilnehmer
- 215: erste Verbindung
- 220: zweiter Netzwerkteilnehmer
- 225: zweite Verbindung
- 230: dritter Netzwerkteilnehmer
- 235: dritte Verbindung
- 240: vierter Netzwerkteilnehmer
- 245: vierte Verbindung
- 250: fünfter Netzwerkteilnehmer

- 300: drittes Netzwerk
- 310: erster Netzwerkteilnehmer
- 315: erste Verbindung
- 320: zweiter Netzwerkteilnehmer
- 325: zweite Verbindung
- 330: dritter Netzwerkteilnehmer
- 335: dritte Verbindung
- 340: vierter Netzwerkteilnehmer
- 345: vierte Verbindung
- 350: fünfter Netzwerkteilnehmer
- 355: fünfte Verbindung
- 360: sechster Netzwerkteilnehmer

- 400: viertes Netzwerk
- 410: erster Netzwerkteilnehmer
- 415: erste Verbindung
- 420: zweiter Netzwerkteilnehmer
- 425: zweite Verbindung
- 430: dritter Netzwerkteilnehmer
- 435: dritte Verbindung
- 440: vierter Netzwerkteilnehmer
- 445: vierte Verbindung
- 450: fünfter Netzwerkteilnehmer

## Patentansprüche

1. Verfahren (20) zum Betreiben eines Netzwerks (100, 200, 300, 400),
wobei ein erster Netzwerkteilnehmer (140, 250, 330, 440) des Netzwerks (100, 200, 300, 400) über eine erste Verbindung (135, 245, 325, 435) mit einem weiteren Netzwerkteilnehmer (130, 240, 320, 430) des Netzwerks (100, 200, 300, 400) verbunden ist,
wobei der erste Netzwerkteilnehmer (140, 250, 330, 440) die folgenden Schritte durchführt:
- Empfangen eines Datentelegramms, das die Information enthält, dass bei Verbindungen ein Parameter auf einen ersten Wert eingestellt werden muss, über die erste Verbindung (135, 245, 325, 435);
- Prüfen, ob der erste Netzwerkteilnehmer (140, 250, 330, 440) über eine zweite Verbindung (145, 335, 345, 355, 445) mit noch einem weiteren Netzwerkteilnehmer (150, 340, 350, 360, 450) des Netzwerks (100, 200, 300, 400) verbunden ist und bei der zweiten Verbindung (145, 335, 345, 355, 445) der Parameter nicht auf den ersten Wert eingestellt ist,
wobei der erste Netzwerkteilnehmer (140, 330, 440) in diesem Fall die folgenden weiteren Schritte durchführt:
- Weiterleiten des Datentelegramms über die zweite Verbindung (145, 335, 345, 355, 445);
- Trennen der zweiten Verbindung (145, 335, 345, 355, 445) ;
- Neuaufbauen der zweiten Verbindung (145, 335, 345, 355, 445), wobei der Parameter für die zweite Verbindung (145, 335, 345, 355, 445) auf den ersten Wert eingestellt wird.

2. Verfahren (20) gemäß Anspruch 1,
wobei der erste Netzwerkteilnehmer (140, 250, 330, 440) das Datentelegramm über alle seine Verbindungen aussendet, bei denen der Parameter nicht auf den ersten Wert eingestellt ist, außer über die erste Verbindung (135, 245, 325, 435).

3. Verfahren (10, 20) gemäß einem der vorhergehenden Ansprüche,
wobei ein zweiter Netzwerkteilnehmer (120, 220, 230, 320) des Netzwerks (100, 200, 300) über eine dritte Verbindung (115, 225, 315) und eine vierte Verbindung (125, 215, 235, 325) mit weiteren Netzwerkteilnehmern (130, 210, 240, 330) des Netzwerks (100, 200, 300) verbunden ist,
wobei der zweite Netzwerkteilnehmer (120, 220, 230, 320) die folgenden Schritte durchführt:
- Erkennen, dass bei der dritten Verbindung (115, 225, 315) der Parameter auf den ersten Wert eingestellt ist und bei der vierten Verbindung (125, 215, 235, 325) der Parameter auf einen zweiten Wert eingestellt ist;
- Aussenden des Datentelegramms, das die Information enthält, dass bei Verbindungen der Parameter auf den ersten Wert eingestellt werden muss;
- Trennen der vierten Verbindung (125, 215, 235, 325);
- Neuaufbauen der vierten Verbindung (125, 215, 235, 325), wobei der Parameter für die vierte Verbindung (125, 215, 235, 325) auf den ersten Wert eingestellt wird.

4. Verfahren (10, 20) gemäß Anspruch 3,
wobei der zweite Netzwerkteilnehmer (120, 220, 230, 320) das Datentelegramm über die vierte Verbindung (125, 215, 235, 325) aussendet.

5. Verfahren (10, 20) gemäß Anspruch 4,
wobei der zweite Netzwerkteilnehmer (120, 220, 230, 320) das Datentelegramm über alle seine Verbindungen (125, 215, 235, 325) aussendet, bei denen der Parameter nicht auf den ersten Wert eingestellt ist.

6. Verfahren (10, 20) gemäß einem der Ansprüche 3 bis 5,
wobei der zweite Netzwerkteilnehmer (120, 220, 230, 320) das Datentelegramm nicht über die dritte Verbindung (115, 225, 315) aussendet.

7. Verfahren (20, 30) gemäß einem der Ansprüche 1 bis 3,
wobei ein zweiter Netzwerkteilnehmer (410) des Netzwerks (400) über eine dritte Verbindung (415) mit einem weiteren Netzwerkteilnehmer (420) des Netzwerks (400) verbunden ist,
wobei der zweite Netzwerkteilnehmer (410) die folgenden Schritte durchführt:
- Aussenden des Datentelegramms, das die Information enthält, dass bei Verbindungen der Parameter auf den ersten Wert eingestellt werden muss, über die dritte Verbindung (415).

8. Verfahren (20, 30) gemäß Anspruch 7,
wobei der zweite Netzwerkteilnehmer (410) die folgenden weiteren Schritte durchführt:
- Trennen der dritten Verbindung (415);
- Neuaufbauen der dritten Verbindung (415), wobei der Parameter für die dritte Verbindung (415) auf den ersten Wert eingestellt wird.

9. Verfahren (10, 20, 30) gemäß einem der vorhergehenden Ansprüche,
wobei der Parameter eine Übertragungsrate ist.

10. Verfahren (10, 20, 30) gemäß Anspruch 9,
wobei der erste Wert eine Übertragungsrate von 100 Mbit/s ist.

11. Verfahren (10, 20, 30) gemäß einem der Ansprüche 3 bis 6 und einem der Ansprüche 9 und 10,
wobei der zweite Wert eine Übertragungsrate von 1 Gbit/s ist.

12. Verfahren (10, 20, 30) gemäß einem der Ansprüche 1 bis 8,
wobei der Parameter ein Telegrammformat, eine minimale Telegrammlänge, eine maximale Telegrammlänge, ein minimaler zeitlicher Abstand zwischen zwei gesendeten Datenrahmen, ein Leitungscode oder ein Adressierungsmodus ist.

13. Verfahren (10, 20, 30) gemäß einem der vorhergehenden Ansprüche,
wobei das Datentelegramm ein Ethernet-Telegramm ist.

14. Verfahren (10, 20, 30) gemäß Anspruch 13,
wobei das Datentelegramm ein EtherCAT-Telegramm ist.

15. Netzwerkteilnehmer (120, 140, 220, 250, 320, 330, 410, 440),
wobei der Netzwerkteilnehmer (120, 140, 220, 250, 320, 330, 410, 440) des Netzwerks (100, 200, 300, 400) ausgebildet ist, über eine erste Verbindung (135, 245, 325, 435) mit einem weiteren Netzwerkteilnehmer (130, 240, 320, 430) des Netzwerks (100, 200, 300, 400) verbunden zu sein,
wobei der Netzwerkteilnehmer (120, 140, 220, 250, 320, 330, 440) Mittel zum Empfangen eines Datentelegramms, dass die Information enthält, dass bei Verbindungen ein Parameter auf einen ersten Wert eingestellt werden muss, über die erste Verbindung,
Mittel zum Prüfen, ob der Netzwerkteilnehmer (120, 140, 220, 250, 320, 330, 440) über eine zweite Verbindung (145, 335, 345, 355, 455) mit noch einem weiteren Netzwerkteilnehmer (150, 340, 350, 360, 450) des Netzwerks (100, 200, 300, 400) verbunden ist und bei der zweiten Verbindung (145, 335, 345, 355, 455) der Parameter nicht auf den ersten Wert eingestellt ist,
Mittel zum Weiterleiten des Datentelegramms über die zweite Verbindung (145, 335, 345, 355, 455),
Mittel zum Trennen der zweiten Verbindung (145, 335, 345, 355, 455) und
Mittel zum Neuaufbau der zweiten Verbindung (145, 335, 345, 355, 455), wobei der Parameter für die zweite Verbindung (145, 335, 345, 355, 455) auf den ersten Wert eingestellt wird, aufweist.

## Claims

1. Method (20) for operating a network (100, 200, 300, 400),
wherein a first network participant (140, 250, 330, 440) of the network (100, 200, 300, 400) is connected via a first connection (135, 245, 325, 435) to a further network participant (130, 240, 320, 430) of the network (100, 200, 300, 400), wherein the first network participant (140, 250, 330, 440) carries out the following steps:
- receiving a data message containing the information that a parameter must be set to a first value in connections, via the first connection (135, 245, 325, 435);
- checking whether the first network participant (140, 250, 330, 440) is connected via a second connection (145, 335, 345, 355, 445) to a still further network participant (150, 340, 350, 360, 450) of the network (100, 200, 300, 400) and the parameter is not set to the first value in the second connection (145, 335, 345, 355, 445),
wherein the first network participant (140, 330, 440) in this case carries out the following further steps:
- forwarding the data message via the second connection (145, 335, 345, 355, 445);
- clearing down the second connection (145, 335, 345, 355, 445);
- re-establishing the second connection (145, 335, 345, 355, 445), wherein the parameter for the second connection (145, 335, 345, 355, 445) is set to the first value.

2. Method (20) according to Claim 1,
wherein the first network participant (140, 250, 330, 440) transmits the data message via all its connections in which the parameter is not set to the first value, except via the first connection (135, 245, 325, 435)

3. Method (10, 20) according to one of the preceding claims,
wherein a second network participant (120, 220, 230, 320) of the network (100, 200, 300) is connected via a third connection (115, 225, 315) and a fourth connection (125, 215, 235, 325) to further network participants (130, 210, 240, 330) of the network (100, 200, 300),
wherein the second network participant (120, 220, 230, 320) carries out the following steps:
- recognizing that the parameter is set to the first value in the third connection (115, 225, 315) and the parameter is set to a second value in the fourth connection (125, 215, 235, 325);
- transmitting the data message containing the information that the parameter must be set to the first value in connections;
- clearing down the fourth connection (125, 215, 235, 325);
- re-establishing the fourth connection (125, 215, 235, 325), wherein the parameter for the fourth connection (125, 215, 235, 325) is set to the first value.

4. Method (10, 20) according to Claim 3,
wherein the second network participant (120, 220, 230, 320) transmits the data message via the fourth connection (125, 215, 235, 325).

5. Method (10, 20) according to Claim 4,
wherein the second network participant (120, 220, 230, 320) transmits the data message via all its connections (125, 215, 235, 325) in which the parameter is not set to the first value.

6. Method (10, 20) according to one of Claims 3 to 5,
wherein the second network participant (120, 220, 230, 320) does not transmit the data message via the third connection (115, 225, 315).

7. Method (20, 30) according to one of Claims 1 to 3,
wherein a second network participant (410) of the network (400) is connected via a third connection (415) to a further network participant (420) of the network (400),
wherein the second network participant (410) carries out the following steps:
- transmitting the data message containing the information that the parameter must be set to the first value in connections, via the third connection (415).

8. Method (20, 30) according to Claim 7,
wherein the second network participant (410) carries out the following further steps:
- clearing down the third connection (415);
- re-establishing the third connection (415), wherein the parameter for the third connection (415) is set to the first value.

9. Method (10, 20, 30) according to one of the preceding claims,
wherein the parameter is a transmission rate.

10. Method (10, 20, 30) according to Claim 9,
wherein the first value is a transmission rate of 100 Mbit/s.

11. Method (10, 20, 30) according to one of Claims 3 to 6 and one of Claims 9 and 10,
wherein the second value is a transmission rate of 1 Gbit/s.

12. Method (10, 20, 30) according to one of Claims 1 to 8,
wherein the parameter is a message format, a minimum message length, a maximum message length, a minimum time interval between two transmitted data frames, a line code or an addressing mode.

13. Method (10, 20, 30) according to one of the preceding claims,
wherein the data message is an Ethernet message.

14. Method (10, 20, 30) according to Claim 13,
wherein the data message is an EtherCAT message.

15. Network participant (120, 140, 220, 250, 320, 330, 410, 440),
wherein the network participant (120, 140, 220, 250, 320, 330, 410, 440) of the network (100, 200, 300, 400) is designed to be connected via a first connection (135, 245, 325, 435) to a further network participant (130, 240, 320, 430) of the network (100, 200, 300, 400),
wherein the network participant (120, 140, 220, 250, 320, 330, 440) contains means for receiving a data message containing the information that a parameter must be set to a first value in connections, via the first connection,
means for checking whether the network participant (120, 140, 220, 250, 320, 330, 440) is connected via a second connection (145, 335, 345, 355, 455) to a still further network participant (150, 340, 350, 360, 450) of the network (100, 200, 300, 400) and the parameter is not set to the first value in the second connection (145, 335, 345, 355, 455),
means for forwarding the data message via the second connection (145, 335, 345, 355, 455),
means for clearing down the second connection (145, 335, 345, 355, 455), and
means for re-establishing the second connection (145, 335, 345, 355, 455), wherein the parameter for the second connection (145, 335, 345, 355, 455) is set to the first value.

## Revendications

1. Procédé (20) pour faire fonctionner un réseau (100, 200, 300, 400),
un premier utilisateur de réseau (140, 250, 330, 440) du réseau (100, 200, 300, 400) étant relié à un utilisateur de réseau supplémentaire (130, 240, 320, 430) du réseau (100, 200, 300, 400) par le biais d'une première liaison (135, 245, 325, 435),
le premier utilisateur de réseau (140, 250, 330, 440) exécutant les étapes suivantes :
- réception par le biais de la première liaison (135, 245, 325, 435) d'un télégramme de données qui contient les informations selon lesquelles, lors de liaisons, un paramètre doit être réglé à une première valeur ;
- contrôle par rapport au fait de savoir si le premier utilisateur de réseau (140, 250, 330, 440) est relié à encore un autre utilisateur de réseau (150, 340, 350, 360, 450) du réseau (100, 200, 300, 400) par le biais d'une deuxième liaison (145, 335, 345, 355, 445) et le paramètre n'est pas réglé à la première valeur lors de la deuxième liaison (145, 335, 345, 355, 445),
le premier utilisateur de réseau (140, 330, 440), dans ce cas, exécutant les étapes supplémentaires suivantes :
- transfert du télégramme de données par le biais de la deuxième liaison (145, 335, 345, 355, 445) ;
- déconnexion de la deuxième liaison (145, 335, 345, 355, 445) ;
- rétablissement de la deuxième liaison (145, 335, 345, 355, 445), le paramètre étant réglé à la première valeur pour la deuxième liaison (145, 335, 345, 355, 445) .

2. Procédé (20) selon la revendication 1, le premier utilisateur de réseau (140, 250, 330, 440) émettant le télégramme de données par le biais de toutes ses liaisons lors desquelles le paramètre n'est pas réglé à la première valeur, sauf par le biais de la première liaison (135, 245, 325, 435).

3. Procédé (10, 20) selon l'une des revendications précédentes, un deuxième utilisateur de réseau (120, 220, 230, 320) du réseau (100, 200, 300) étant relié à des utilisateurs de réseau supplémentaires (130, 210, 240, 330) du réseau (100, 200, 300) par le biais d'une troisième liaison (115, 225, 315) et d'une quatrième liaison (125, 215, 235, 325),
le deuxième utilisateur de réseau (120, 220, 230, 320) exécutant les étapes suivantes :
- reconnaissance du fait que lors de la troisième liaison (115, 225, 315), le paramètre est réglé à la première valeur et que lors de la quatrième liaison (125, 215, 235, 325), le paramètre est réglé à une deuxième valeur ;
- émission du télégramme de données qui contient les informations selon lesquelles, lors des liaisons, le paramètre doit être réglé à la première valeur ;
- déconnexion de la quatrième liaison (125, 215, 235, 325) ;
- rétablissement de la quatrième liaison (125, 215, 235, 325), le paramètre étant réglé à la première valeur pour la quatrième liaison (125, 215, 235, 325).

4. Procédé (10, 20) selon la revendication 3, le deuxième utilisateur de réseau (120, 220, 230, 320) émettant le télégramme de données par le biais de la quatrième liaison (125, 215, 235, 325).

5. Procédé (10, 20) selon la revendication 4, le deuxième utilisateur de réseau (120, 220, 230, 320) émettant le télégramme de données par le biais de toutes ses liaisons (125, 215, 235, 325) lors desquelles le paramètre n'est pas réglé à la première valeur.

6. Procédé (10, 20) selon l'une des revendications 3 à 5, le deuxième utilisateur de réseau (120, 220, 230, 320) n'émettant pas le télégramme de données par le biais de la troisième liaison (115, 225, 315) .

7. Procédé (20, 30) selon l'une des revendications 1 à 3, un deuxième utilisateur de réseau (410) du réseau (400) étant relié à un utilisateur de réseau supplémentaire (420) du réseau (400) par le biais d'une troisième liaison (415),
le deuxième utilisateur de réseau (410) exécutant les étapes suivantes :
- émission par le biais de la troisième liaison (415) du télégramme de données qui contient les informations selon lesquelles, lors des liaisons, le paramètre doit être réglé à la première valeur.

8. Procédé (20, 30) selon la revendication 7, le deuxième utilisateur de réseau (410) exécutant les étapes supplémentaires suivantes :
- déconnexion de la troisième liaison (415) ;
- rétablissement de la troisième liaison (415), le paramètre pour la troisième liaison (415) étant réglé à la première valeur.

9. Procédé (10, 20, 30) selon l'une des revendications précédentes, le paramètre étant un débit de transmission.

10. Procédé (10, 20, 30) selon la revendication 9, la première valeur étant un débit de transmission de 100 Mbit/s.

11. Procédé (10, 20, 30) selon l'une des revendications 3 à 6 et l'une des revendications 9 et 10, la deuxième valeur étant un débit de transmission de 1 Gbit/s.

12. Procédé (10, 20, 30) selon l'une des revendications 1 à 8, le paramètre étant un format de télégramme, une longueur minimale de télégramme, une longueur maximale de télégramme, un intervalle de temps minimal entre deux trames de données envoyées, un code de ligne ou un mode d'adressage.

13. Procédé (10, 20, 30) selon l'une des revendications précédentes, le télégramme de données étant un télégramme Ethernet.

14. Procédé (10, 20, 30) selon la revendication 13, le télégramme de données étant un télégramme EtherCAT.

15. Utilisateur de réseau (120, 140, 220, 250, 320, 330, 410, 440),
l'utilisateur de réseau (120, 140, 220, 250, 320, 330, 410, 440) du réseau (100, 200, 300, 400) étant configuré pour être relié à un utilisateur de réseau supplémentaire (130, 240, 320, 430) du réseau (100, 200, 300, 400) par le biais d'une première liaison (135, 245, 325, 435),
l'utilisateur de réseau (120, 140, 220, 250, 320, 330, 440) possédant des moyens pour recevoir, par le biais de la première liaison, un télégramme de données qui contient les informations selon lesquelles, lors des liaisons, un paramètre doit être réglé à une première valeur,
des moyens pour contrôler si l'utilisateur de réseau (120, 140, 220, 250, 320, 330, 440) est relié à encore un autre utilisateur de réseau (150, 340, 350, 360, 450) du réseau (100, 200, 300, 400) par le biais d'une deuxième liaison (145, 335, 345, 355, 455), et le paramètre n'étant pas réglé à la première valeur lors de la deuxième liaison (145, 335, 345, 355, 455),
des moyens pour transférer le télégramme de données par le biais de la deuxième liaison (145, 335, 345, 355, 455),
des moyens pour déconnecter la deuxième liaison (145, 335, 345, 355, 455) et
des moyens pour rétablir la deuxième liaison (145, 335, 345, 355, 455), le paramètre étant réglé à la première valeur pour la deuxième liaison (145, 335, 345, 355, 455) .
